# EUROPÄISCHE PATENTSCHRIFT

(11) **EP 3 314 230 B1**
(45) Veröffentlichungstag und Bekanntmachung des Hinweises auf die Patenterteilung: **20.02.2019**
(21) Anmeldenummer: 16731931.8
(22) Anmeldetag: 24.06.2016
(51) Int. Cl.: G01M 11/02, G02C 13/00

(54) **VERMESSEN VON INDIVIDUELLEN DATEN EINER BRILLE**
MEASURING INDIVIDUAL DATA OF SPECTACLES
MESURE DES DONNÉES INDIVIDUELLES D'UNE PAIRE DE LUNETTES

(30) Priorität: 25.06.2015 DE 102015211879
(43) Veröffentlichungstag der Anmeldung: 02.05.2018
(73) Patentinhaber: Carl Zeiss AG, 73447 Oberkochen (DE); Carl Zeiss Vision International GmbH, 73430 Aalen (DE)
(72) Erfinder: GLASENAPP, Carsten, 73447 Oberkochen (DE); HORNAUER, Matthias, 73466 Lauchheim-Hülen (DE)
(74) Vertreter: Gauss, Nikolai
(86) Internationale Anmeldenummer: PCT/EP2016/064764
(87) Internationale Veröffentlichungsnummer: WO 2016/207412

(56) Entgegenhaltungen:
- EP-A2- 1 679 499
- WO-A1-95/22748
- DE-A1- 4 110 915
- DE-T2- 69 726 506
- US-A- 5 307 141
- US-A1- 2002 085 196
- US-A1- 2009 214 086

## Beschreibung

Die Erfindung betrifft eine Vorrichtung zum Vermessen von individuellen Daten einer in einer Messposition angeordneten Brille mit einem linken und/oder einem rechten Brillenglas. Die Erfindung betrifft außerdem ein Verfahren zum Vermessen von individuellen Daten einer in einer Messposition angeordneten Brille.

Eine Vorrichtung und ein Verfahren der eingangs genannten Art sind aus der US 2007/0121100 A1 bekannt. Dort ist eine Messvorrichtung für das Vermessen von Brillen beschreiben, die eine erste Messstation aufweist, in der es eine Beleuchtungseinrichtung und eine erste Bilderfassungseinrichtung mit einer Kamera gibt, die für das Erfassen der Permanentmarkierungen auf einem Brillenglas dient. In einer von der ersten Messstation beabstandet angeordneten weiteren Messstation weist die Messvorrichtung eine weitere Bilderfassungseinrichtung mit einer Kamera auf, die für das Vermessen der Brechkraft von Brillengläsern dient. In der Messvorrichtung muss eine zu vermessende Brille zwischen den Messstationen mit einem Aufnahmemechanismus referenziert verlagert werden.

DE 1 238 690 B1 beschreibt einen Scheitelbrechwertmesser mit einer Brillenanlage für das Vermessen des Scheitelbrechwerts von Brillengläsern, die in die Fassung einer Brille eingefasst sind.

Die WO 2005/121740 A1 offenbart eine Vorrichtung für das Prüfen eines für das Licht transparenten oder das Licht reflektierenden optischen Elements mit einer Beleuchtungseinrichtung und mit einer Kamera. Das zu prüfende optische Element wird in der Vorrichtung zwischen der Beleuchtungseinrichtung und der Kamera angeordnet. Mit Hilfe der Beleuchtungseinrichtung wird dann eine Vielzahl an Mustern bereitgestellt, welche eine Phasenverschiebung durchlaufen. Aus den phasenverschobenen Mustern wird anschließend ein Einzelbild berechnet, aus dem optische Daten des optischen Elements abgeleitet werden.

Die US 5,307,141 beschreibt eine Vorrichtung für das Bestimmen der Brechkraftverteilung von Brillengläsern in einer Brille. Ein Erfassen von ein lokales, körpereigenes Koordinatensystem definierenden Permanentmarkierungen der Brillengläser erfolgt hier jedoch nicht.

Aus der WO 95/22748 A1 und der EP 1 679 499 A ist eine Vorrichtung für das Bestimmen der Brechkraftverteilung von Brillengläsern bekannt, in der Brillengläser ohne ein Brillengestell vermessen werden.

Die DE 697 26 506 T2 gibt ein System für das Bestimmen der Brechkraftverteilung von Brillengläsern in einer Brille an, die eine erste Messstation für das Bestimmen der Rahmenform hat und die eine von der ersten Messstation getrennt angeordnete weitere Messstation enthält, die für das Bestimmen von optischen Kenngrößen von Brillengläsern dient, wenn diese noch nicht in einer Brille aufgenommen sind.

Um einem Brillenträger das scharfe Sehen zu ermöglichen, müssen die Brillengläser in der Fassung einer Brille zu den Augen des Brillenträgers korrekt positioniert und ausgerichtet werden. Das korrekte Ausrichten und Positionieren ist grundsätzlich bei allen Brillengläsern erforderlich. Besondere Bedeutung hat das korrekte Ausrichten und Positionieren der Brillengläser bei individualisierten optischen Brillenglasdesigns und/oder bei Gleitsichtgläsern. Gleitsichtgläser ermöglichen Brillenträgern das scharfe Sehen in unterschiedlichen Gebrauchssituationen, z. B. in unterschiedlichen Entfernungen, nur durch Verändern der Blickrichtung ohne dass es dabei eines größeren Akkommodationserfolges der Augen bedarf. Individuelle Gläser und/oder Gleitsichtgläser haben einen oder mehrere Bezugspunkte, z. B. einen Fernbezugspunkt sowie einen Nahbezugspunkt, deren Lage, je nach Gebrauchssituation an den Ort der Pupillen der Augen eines Brillenträgers angepasst werden muss.

In der Fachwelt werden der Nahbezugspunkt und der Fernbezugspunkt von Gleitsichtgläsern auch als Nah-Konstruktionspunkt und Fern-Konstruktionspunkt bezeichnet. Eine Definition dieser Punkte ist in Kapitel 5.13 und 5.14 der Norm EN ISO 13666:1998 angegeben, auf die hiermit vollumfänglich Bezug genommen und deren Inhalt in dieser Anmeldung mit einbezogen wird.

Das optimale Sehen mit Gleitsichtgläsern setzt voraus, dass die in einer Brillenfassung aufgenommenen Gleitsichtgläser vor den Augen des Brillenträgers so positioniert werden, dass die Lage des Fern- und die Lage des Nahbezugspunkts mit den Blickrichtungen des Brillenträgers beim Blick in die Ferne und beim Blick in die Nähe in Einklang sind. Deshalb müssen entsprechend den Angaben in Abschnitt 7 der Normungsvorschrift DIN EN ISO 8980-2:2004 Gleitsicht-Brillengläser dauerhaft mit mindestens zwei Markierungen versehen werden. Diese mindestens zwei Markierungen müssen nach der vorgenannten Norm auf einem Gleitsicht-Brillenglas in einem Abstand von 34 mm bestehen und zu einer vertikalen Ebene durch den Anpasspunkt oder den Prismenbezugspunkt symmetrisch angeordnet sein. Diese beiden Markierungen definieren ein lokales, körpereigenes Koordinatensystem für das Brillenglas. Mit diesen Markierungen können bei einem Brillenglas sowohl die Glashorizontale als auch Bezugspunkte, wie z. B. der Fern- und der Nahbezugspunkt, der in Kapitel 5.24 der Norm EN ISO 13 666:1998 definierte sogenannte Anpasspunkt oder der in dem Kapitel 14.2.12 der Norm EN ISO 13 666:1998 definierte Prismenbezugspunkt rekonstruiert werden.

Gemäß der Norm EN ISO 13 666:1998 ist der Anpasspunkt ein Punkt auf der Vorderfläche eines Brillenglases oder Brillenglas-Halbfabrikats, der nach der Angabe des Herstellers als Bezugspunkt für die Positionierung des Brillenglases vor den Augen dienen soll.

Auf ungerandeten Brillengläsern, die ein Augenoptiker für einen Brillenträger aufgrund eines bei diesem bestimmten Refraktionsdefizits von einem Brillenglas-Hersteller erhält, ist die Lage dieser Punkte mit den vorgenannten Markierungen implizit angegeben. D. h., anhand der genannten Markierungen oder anhand von auf den Brillengläsern aufgedruckten und zu den Markierungen referenzierten Figuren kann ein Augenoptiker den Fern- und Nahbezugspunkt, den Anpasspunkt und den Prismenbezugspunkt ermitteln. Der Prismenbezugspunkt ist nach der Norm EN ISO 13 666:1998 der von einem Hersteller angegebene Punkt auf der Vorderfläche eines Gleitsicht-Brillenglases oder einem Gleitsicht-Brillenglas-Halbfertigprodukt, in dem die prismatischen Wirkungen des fertigen Glases bestimmt werden müssen.

Damit wird es einem Augenoptiker erleichtert, das ungerandete Brillenglas vor dem Einschleifen korrekt auszurichten und es dann in der richtigen Position in eine Brillenfassung einzusetzen, so dass der Brillenträger optimal sehen kann.

Unter individuellen Daten einer Brille versteht diese Erfindung insbesondere sogenannte brillenträgerspezifische Anpassdaten der Brille, d. h. Daten aus der Gruppe Brechkraft eines Brillenglases der Brille, Brechkraftverteilung eines Brillenglases der Brille, Position des Nahbezugspunkts und Position des Fernbezugspunkts eines Brillenglases der Brille in einem Koordinatensystem, das zu der Brille und damit mittelbar auch zu einem Brillenträger, der diese Brille trägt, referenziert ist. Unter individuellen Daten einer Brille versteht diese Erfindung auch die Lage der mindestens zwei Markierungen auf einem Gleitsicht-Brillenglas nach der Normungsvorschrift DIN EN ISO 8980-2:2004 in einem Koordinatensystem, das zu der Brille referenziert ist, in der das Gleitsichtglas angeordnet ist.

Aufgabe der Erfindung ist es, das Überprüfen der individuellen Daten einer Brille mit darin eingefassten Brillengläsern zu ermöglichen.

Diese Aufgabe wird durch eine Vorrichtung mit den Merkmalen des Anspruchs 1 oder des Anspruchs 3 oder des Anspruchs 11 und ein Verfahren mit den Merkmalen des Anspruchs 9 oder des Anspruchs 10 oder des Anspruchs 13 gelöst. Vorteilhafte Ausführungsformen der Erfindung sind in den abhängigen Ansprüchen angegeben.

Die erfindungsgemäße Vorrichtung zum Vermessen von individuellen Daten einer in einer Messposition angeordneten Brille mit einem linken und/oder einem rechten Brillenglas enthält ein Display für das Anzeigen einer Teststruktur. Die Vorrichtung hat eine Bilderfassungseinrichtung für das Erfassen der Teststruktur mit einem Abbildungsstrahlengang, der das linke Brillenglas und/oder das rechte Brillenglas der Brille durchsetzt. In der Vorrichtung gibt es außerdem eine Rechnereinheit. Die Rechnereinheit enthält ein Computerprogramm, das aus der mit der Bilderfassungseinrichtung erfassten Abbildung der Teststruktur und einer bekannten räumlichen Lage des Displays relativ zu der Bilderfassungseinrichtung sowie vorzugsweise einer bekannten räumlichen Lage der Brille relativ zu der Bilderfassungseinrichtung eine Brechkraftverteilung für wenigstens einen Abschnitt des linken Brillenglases und/oder des rechten Brillenglases bestimmt.

Eine erfindungsgemäße Vorrichtung zum Vermessen von individuellen Daten einer Brille enthält bevorzugt eine Anlage, die für eine daran anliegende in der Messposition angeordnete Brille eine bekannte räumliche Lage der Brille relativ zu der Bilderfassungseinrichtung definiert. Diese Anlage kann in einer Aufnahme der Vorrichtung für das Anordnen der Brille in der Messposition ausgebildet sein. Alternativ hierzu oder zusätzlich kann eine erfindungsgemäße Vorrichtung zum Vermessen von individuellen Daten einer Brille eine Einrichtung für das Bestimmen der räumlichen Lage einer in der Messposition angeordneten Brille relativ zu der Bilderfassungseinrichtung aufweisen. Die Einrichtung kann beispielsweise eine Halterung, beispielsweise wenigstens eines Bügels der Brille sein, welche die Brille in einer definierten räumlichen Lage innerhalb der erfindungsgemäßen Vorrichtung fixiert.

Das erfindungsgemäße Verfahren zum Vermessen individueller Daten einer in einer Messposition angeordneten Brille sieht vor, dass eine Teststruktur bereitgestellt wird und die Teststruktur dann mit einem Abbildungsstrahlengang abgebildet wird, der ein linkes und/oder rechtes Brillenglas der in der Messposition angeordneten Brille durchsetzt.

Die Brechkraftverteilung des linken Brillenglases und/oder des rechten Brillenglases wird dann aus den Koordinaten der Teststruktur und der erfassten Abbildung der Teststruktur und vorzugsweise aus der Position des linken Brillenglases und/oder des rechten Brillenglases relativ zu der Teststruktur oder der Abbildung der Teststruktur bestimmt, z. B. mit einem Computerprogramm mittels Bildauswertung.

Die Teststruktur ist vorzugsweise zweidimensional. Eine Teststruktur in dem erfindungsgemäßen Verfahren kann aber auch dreidimensional sein. Zu bemerken ist, dass eine dreidimensionale Teststruktur, z. B. eine Teststruktur in Form eines räumlich ausgedehnten Gegenstands oder eine Teststruktur in Form von mehreren etwa in einem Glaswürfel aufgenommenen Teilstrukturen, die in unterschiedlichen Ebenen angeordnet sind, die Möglichkeit bietet, im Rahmen der Erfindung durch eine Verrechnung von Lichtstrahlen aus verschiedenen Abständen auf die Position des Brillenglases im Messaufbau, das Verhältnis der Krümmungsradien, die Brechzahl eines Brillenglases oder dessen Dicke in einer Brille zu schließen, die in der Messposition in der Vorrichtung zum Vermessen von individuellen Daten der Brille angeordnet ist.

Eine Idee der Erfindung ist es dabei insbesondere, dass das Computerprogramm die Brechkraftverteilung in einem zu einem Koordinatensystem der Brille referenzierten Koordinatensystem ermittelt. Unter einem Koordinatensystem der Brille wird dabei ein Koordinatensystem verstanden, das zu der Brille ortsfest ist. Alternativ oder zusätzlich ist es auch möglich, dass das Computerprogramm der Rechnereinheit die Brechkraftverteilung in einem zu einem Koordinatensystem des linken und/oder rechten Brillenglases referenzierten Koordinatensystem bestimmt.

Die Vorrichtung kann auch als eine Bilderfassungseinrichtung für das Erfassen eines ein Koordinatensystem der Brille definierenden Abschnitts des Brillengestells einer in einer Messposition angeordneten Brille ausgelegt sein.

Eine Idee der Erfindung ist es insbesondere, dass die Bilderfassungseinrichtung die Teststruktur in einer zu dem linken Brillenglas konjugierten Bildebene und/oder in einer zu dem rechten Brillenglas konjugierten Bildebene erfasst.

Die Bilderfassungseinrichtung umfasst bevorzugt wenigstens eine Kamera, besonders bevorzugt wenigstens zwei Kameras und ganz besonders bevorzugt wenigstens drei Kameras.

Die Bilderfassungseinrichtung kann auch eine erste Kamera mit einer ersten Bildebene und eine zweite Kamera mit einer zweiten Bildebene aufweisen, wobei das linke Brillenglas einer in einer Messposition angeordneten Brille in der ersten Bildebene abbildbar ist und/oder das rechte Brillenglas einer in einer Messposition angeordneten Brille in der zweiten Bildebene abbildbar ist.

In einer erfindungsgemäßen Vorrichtung kann auch vorgesehen sein, dass die erste Kamera eine Kameraoptik mit einer optischen Achse hat, die das linke Brillenglas einer in einer Messposition angeordneten Brille mit einem linken Brillenglas durchsetzt, und die zweite Kamera eine Kameraoptik mit einer optischen Achse hat, die das rechte Brillenglas einer in einer Messposition angeordneten Brille mit einem rechten Brillenglas durchsetzt, wobei die optische Achse der Kameraoptik der ersten Kamera zu der optischen Achse der Kameraoptik der zweiten Kamera parallel ist.

Zu bemerken ist, dass mit einer Bilderfassungseinrichtung, die in der Vorrichtung für das Vermessen von individuellen Daten einer Brille das Erfassen von Abschnitten der Brille mit zwei, drei oder auch noch mehr Kameras ermöglicht, die unterschiedliche optische Achsen haben, die Genauigkeit der damit ermittelten individuellen Daten einer Brille erhöht werden kann.

Dabei kann auch vorgesehen sein, dass die erste Kamera eine Kameraoptik mit einer optischen Achse hat, die das linke Brillenglas einer in der Messposition angeordneten Brille mit einem linken Brillenglas durchsetzt, und die zweite Kamera eine Kameraoptik mit einer optischen Achse hat, die das rechte Brillenglas einer in einer Messposition angeordneten Brille mit einem rechten Brillenglas durchsetzt, wobei die optische Achse der Kameraoptik der ersten Kamera mit der optischen Achse der Kameraoptik der zweiten Kamera einen Stereowinkel α einschließt.

In einer erfindungsgemäßen Vorrichtung kann weiterhin vorgesehen sein, dass die erste Kamera der Bilderfassungseinrichtung eine Kameraoptik mit einer optischen Achse hat, die das linke Brillenglas der in der Messposition angeordneten Brille durchsetzt und die dritte Kamera der Bilderfassungseinrichtung eine Kameraoptik mit einer optischen Achse hat, die das rechte Brillenglas der in der Messposition angeordneten Brille durchsetzt, wobei die optische Achse der Kameraoptik der ersten Kamera mit der optischen Achse der Kameraoptik der dritten Kamera einen Stereowinkel a' einschließt und wobei die zweite Kamera mit der optischen Achse der Kameraoptik mit den optischen Achsen der Kameraoptiken jeweils einen Stereowinkel ß einschließt.

Die Vorrichtung kann auch eine Beleuchtungseinrichtung für das Bereitstellen von Beleuchtungslicht mit einem Beleuchtungsstrahlengang aufweisen, der das linke Brillenglas einer in einer Messposition angeordneten Brille mit einem linken Brillenglas in der optischen Achse der Kameraoptik der ersten Kamera durchsetzt und der das rechte Brillenglas einer in einer Messposition angeordneten Brille mit einem rechten Brillenglas in der optischen Achse der Kameraoptik der zweiten Kamera durchsetzt.

Eine Idee der Erfindung ist es auch, dass die Bilderfassungseinrichtung eine Kamera mit einer Bildebene aufweist, wobei das linke Brillenglas einer in einer Messposition angeordneten Brille in der Bildebene abbildbar ist und/oder das rechte Brillenglas einer in einer Messposition angeordneten Brille in der Bildebene abbildbar ist. Hier ist es insbesondere eine Idee der Erfindung, eine Beleuchtungseinrichtung für das Bereitstellen von Beleuchtungslicht mit einem Beleuchtungsstrahlengang vorzusehen, der in der optischen Achse der Kameraoptik auf eine in einer Messposition angeordnete Brille gerichtet ist.

Von Vorteil ist es, wenn die Vorrichtung dabei einen einstellbaren Reflektor enthält, der in einer ersten Einstellung das Beleuchtungslicht, das durch das linke Brillenglas und/oder das rechte Brillenglas einer in einer Messposition angeordneten Brille hindurchtritt, zumindest teilweise durch das linke Brillenglas und/oder das rechte Brillenglas zurück reflektiert; und der in einer von der ersten Einstellung verschiedenen zweiten Einstellung den Abbildungsstrahlengang für das Erfassen der an dem Display angezeigten Teststruktur mit der Bilderfassungseinrichtung freigibt. Dieser Reflektor kann z. B. auf einer vorzugsweise motorisch angetriebenen drehbaren Scheibe angeordnet sein, die wenigstens einen für das Licht durchlässigen Sektor aufweist.

Die Erfindung erstreckt sich auch auf ein System für das Überprüfen individueller Daten von verglasten Brillen mit einer vorstehend angegebenen Vorrichtung. Ein solches System umfasst eine vorstehend angegebene Vorrichtung. Um individuelle Daten zu überprüfen, werden in dem System individuelle Daten einer Brille vermessen und die gemessenen Daten mit einem Sollwert entsprechender Daten verglichen.

Darüber hinaus erstreckt sich die Erfindung auch auf und ein Computerprogrammprodukt mit einem Computerprogramm nach Anspruch 15 für das Bereitstellen einer Teststruktur und/oder für das Erfassen einer Abbildung der Teststruktur mit einem Abbildungsstrahlengang, der ein linkes und/oder rechtes Brillenglas der in der Messposition angeordneten Brille durchsetzt, und/oder für das Bestimmen der Brechkraftverteilung eines linken Brillenglases und/oder eines rechten Brillenglases einer Brille mit einer Rechnereinheit.

Erfindungsgemäß kann vorgesehen sein, in einem System für das Überprüfen individueller Daten eine Einrichtung für das Ermitteln des UV-Absorptionsverhaltens eines rechten und/oder linken Brillenglases der Brille vorzusehen. Im Rahmen der Erfindung ist es auch möglich, in einem solchen System z. B. mit einer Kamera erfasste Daten über eine situationsabhängige Pupillenlage in einem zu der Brille eines Brillenträgers ortsfesten Koordinatensystem mit den in einer vorstehend angegebenen Vorrichtung ermittelten individuellen Daten, insbesondere brillenträgerspezifischen Daten in Beziehung zu setzen, um eine Aussage darüber zu treffen, ob das linke und/oder rechte Brillenglas in die Brille korrekt eingesetzt ist und dort einen richtigen Sitz hat. Alternativ oder zusätzlich ist es auch möglich, in einem solchen System die Soll-Daten eines Linsendesigns mit der für ein linkes und/oder rechtes Brillenglas der Brille ermittelten Brechkraftverteilung zu vergleichen, um eine Aussage zu treffen, ob die überprüfte Brille die richtigen Brillengläser enthält.

Bei einer Ausführungsform der Erfindung umfasst die Vorrichtung zum Vermessen von individuellen Daten einer in einer Messposition angeordneten Brille mit einem linken Brillenglas und/oder einem rechten Brillenglas, wenigstens
a) ein Display für das Anzeigen einer, vorzugsweise ortsfesten, Teststruktur,
b) optional eine Beleuchtungseinrichtung zur Erzeugung von UV-Licht,
c) optional einen Reflektor, welcher wenigstens einen für sichtbares Licht, vorzugsweise Beleuchtungslicht, durchlässigen Bereich, und wenigstens einen Bereich umfasst, an welchem Licht, vorzugsweise Beleuchtungslicht, zurück reflektiert wird,
d) optional eine Beleuchtungseinrichtung zur Erzeugung von Beleuchtungslicht,
e) eine Bilderfassungseinrichtung für das Erfassen der, vorzugsweise ortsfesten, Teststruktur, umfassend wenigstens eine Kamera, bevorzugt wenigstens zwei Kameras,
f) eine Rechnereinheit mit einem Computerprogramm, das aus der mit der Bilderfassungseinrichtung erfassten Abbildung der, vorzugsweise ortsfesten, Teststruktur und einer bekannten räumlichen Lage des Displays relativ zu der Bilderfassungseinrichtung sowie optional einer bekannten räumlichen Lage der Brille relativ zu der Bilderfassungseinrichtung wenigstens die Brechkraftverteilung für wenigstens einen Abschnitt des linken Brillenglases und/oder des rechten Brillenglases bestimmt.

Bei einer bevorzugten Ausführungsform der Erfindung umfasst die Vorrichtung zum Vermessen von individuellen Daten einer in einer Messposition angeordneten Brille mit einem linken Brillenglas und/oder einem rechten Brillenglas, wenigstens
a) ein Display für das Anzeigen einer, vorzugsweise ortsfesten, vorzugsweise zweidimensionalen, Teststruktur,
b) optional einen Reflektor, welcher für Licht, bevorzugt sichtbares Licht, besonders bevorzugt Beleuchtungslicht, durchlässige und nicht durchlässige Bereiche umfasst, wobei der Reflektor vorzugsweise zwischen Display und zu vermessender Brille angeordnet ist und vorzugsweise drehbar ist,
c) optional eine Beleuchtungseinrichtung zur Erzeugung von Beleuchtungslicht
d) eine Bilderfassungseinrichtung für das Erfassen der, vorzugsweise ortsfesten, vorzugsweise zweidimensionalen, Teststruktur, umfassend wenigstens zwei Kameras, und
e) eine Rechnereinheit mit einem Computerprogramm, das aus der mit der Bilderfassungseinrichtung erfassten Abbildung der, vorzugsweise ortsfesten, Teststruktur und einer bekannten räumlichen Lage des Displays relativ zu der Bilderfassungseinrichtung wenigstens die Brechkraftverteilung für wenigstens einen Abschnitt des linken Brillenglases und/oder des rechten Brillenglases sowie optional die räumliche Lage von Permanentmarkierungen im linken Brillenglas und/oder rechten Brillenglas bestimmt.

Bei einer weiteren Ausführungsform der Erfindung umfasst die Vorrichtung zum Vermessen von individuellen Daten einer in einer Messposition angeordneten Brille mit einem linken Brillenglas und/oder einem rechten Brillenglas, wenigstens
a) ein Display für das Anzeigen einer, vorzugsweise ortsfesten, vorzugsweise zweidimensionalen, Teststruktur,
b) wenigstens eine Anlage für die Brille und/oder wenigstens eine Anlage für das rechte Brillenglas und/oder wenigstens eine Anlage für das linke Brillenglas, wobei sich diese Anlagen vorzugsweise auf der Auflage für die Brille befinden,
c) eine Bilderfassungseinrichtung für das Erfassen der, vorzugsweise ortsfesten, vorzugsweise zweidimensionalen, Teststruktur, umfassend wenigstens eine Kamera, bevorzugt wenigstens zwei Kameras, und
d) eine Rechnereinheit mit einem Computerprogramm, das aus der mit der Bilderfassungseinrichtung erfassten Abbildung der, vorzugsweise ortsfesten, vorzugsweise zweidimensionalen, Teststruktur und einer bekannten räumlichen Lage des Displays relativ zu der Bilderfassungseinrichtung sowie optional einer bekannten räumlichen Lage der Brille relativ zu der Bilderfassungseinrichtung wenigstens die Brechkraftverteilung für wenigstens einen Abschnitt des linken Brillenglases und/oder des rechten Brillenglases bestimmt.

Nachfolgend werden vorteilhafte Ausführungsbeispiele der Erfindung beschrieben, die in den Zeichnungen schematisch dargestellt sind.

Es zeigen:
- Fig. 1: eine erste Vorrichtung für das Vermessen von individuellen Daten einer Brille mit einer Bilderfassungseinrichtung, die eine erste und eine zweite Kamera aufweist;
- Fig. 2: eine Teilansicht der Vorrichtung aus Fig. 1 als Schnitt;
- Fig. 3: ein Brillenglas einer Gleitsichtbrille mit Markierungen, die ein lokales Koordinatensystem definieren;
- Fig. 4: eine Brille mit einem Messbügel für das Bestimmen der Pupillenlage bei einer Beobachtungsperson;
- Fig. 5: eine Ausführungsform einer Reflektorscheibe in einer Vorrichtung für das Vermessen von individuellen Daten einer Brille;
- Fig. 6a: und Fig. 6b alternative Ausführungsformen für eine Reflektorscheibe in einer Vorrichtung für das Vermessen von individuellen Daten einer Brille;

- Fig. 7: eine zweite Vorrichtung für das Vermessen von individuellen Daten einer Brille;
- Fig. 8: eine dritte Vorrichtung für das Vermessen von individuellen Daten einer Brille mit einer Bilderfassungseinrichtung, die nur eine Kamera enthält;
- Fig. 9: eine vierte Vorrichtung für das Vermessen von individuellen Daten einer Brille mit einer Bilderfassungseinrichtung, die eine erste, eine zweite Kamera und eine dritte Kamera aufweist;
- Fig. 10: die Bildfelder der ersten, zweiten und dritten Kamera mit einer zu vermessenden Brille;
- Fig. 11: eine Teilansicht der Vorrichtung aus Fig. 9 als Schnitt; und
- Fig. 12: ein Flussdiagramm über das Vermessen von individuellen Daten einer Brille mit einer erfindungsgemäßen Vorrichtung.

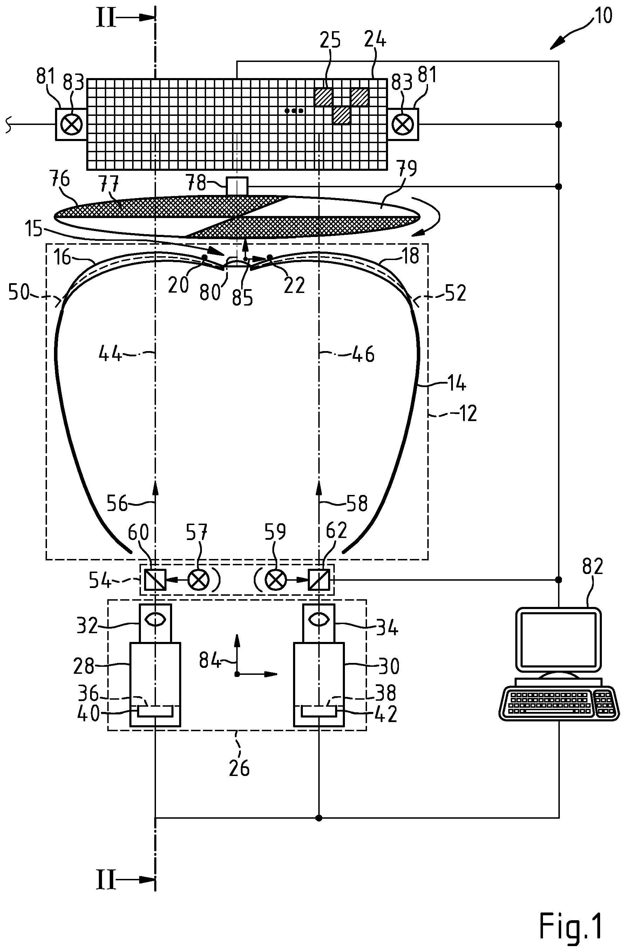

Die in der Fig. 1 gezeigte Vorrichtung 10 dient für das Vermessen von individuellen Daten einer Brille 14. Die Vorrichtung 10 hat eine Aufnahme 12 für das Anordnen einer zu vermessenden Brille 14 mit einem linken und rechten Brillenglas 16, 18 in einer Messposition an einer Anlage 15 für die Brille 14. Die Anlage 15 für die Brille 14 weist eine Anlage 20 für das linke Brillenglas 16 und eine Anlage 22 für das rechte Brillenglas 18 auf. In der Messposition ist das linke Brillenglas 16 an eine Anlage 20 und das rechte Brillenglas 18 an eine Anlage 22 angelegt. Mittels der Anlage 15 ist die Messposition einer in der Aufnahme 12 angeordneten Brille 14 eindeutig definiert.

Zu bemerken ist, dass bei einer modifizierten Ausführungsform der Vorrichtung 10 auch eine Anlage 15 vorgesehen sein kann, die eine oder mehrere Anlagen hat, an denen eine in der Aufnahme 12 angeordnete Brille 14 mit dem Rahmen oder einem Rahmenteil oder einem Brillenglasrand und einem linken 16 oder rechten Brillenglas 18 anliegt.

Zu bemerken ist auch, dass bei einer weiteren, modifizierten Ausführungsform der Vorrichtung 10 auch eine Anlage 15 vorgesehen sein kann, an der eine rahmenlose Brille mit einem Brillenglasrand wenigstens eines Brillenglases der Brille 14 anliegt.

In der Vorrichtung 10 gibt es ein flächiges Display 24 für das Anzeigen einer zweidimensionalen Teststruktur 25. Die Vorrichtung 10 enthält eine Bilderfassungseinrichtung 26. Die Bilderfassungseinrichtung 26 weist eine erste Kamera 28 und eine zweite Kamera 30 auf. Die erste Kamera 28 und die zweite Kamera 30 haben jeweils eine Kameraoptik 32, 34, die für das Erfassen der mittels des Displays 24 angezeigten Teststruktur 25 in einer Bildebene 36, 38 mit einem Bildsensor 40, 42 in der ersten bzw. der zweiten Kamera 28, 30 ausgelegt ist. Die Kameraoptik 32 der ersten Kamera 28 hat dabei eine optische Achse 44, die das linke Brillenglas 16 einer in der Messposition in der Aufnahme der Vorrichtung 10 angeordneten Brille 14 durchsetzt. Entsprechend hat die Kameraoptik 34 der zweiten Kamera 30 eine optische Achse 46, welche durch das rechte Brillenglas 18 einer in der Messposition in der Aufnahme der Vorrichtung 10 angeordneten Brille 14 verläuft.

Zu bemerken ist, dass in einer modifizierten Ausführungsform der Vorrichtung 10 auch eine Anlage 15 vorgesehen sein kann, an der die Brille 14 mit ihrem Rahmen anliegt oder an der eine in der Vorrichtung 10 zu vermessende Brille 14 auf ihrer den Kameras 28, 30 zugewandten Seite anliegt.

In der Vorrichtung 10 sind die optischen Achsen der ersten Kamera 28 und der zweiten Kamera 30 zueinander parallel. Die Anlage 20 für das linke Brillenglas 16 und die Anlage 22 für das rechte Brillenglas 18 in der Vorrichtung 10 befinden sich bei oder nahe einer das Brillenglas 16 bzw. das Brillenglas 18 durchsetzenden Bezugsfläche 50, 52, die zu der Bildebene 36, 38 der ersten bzw. zweiten Kamera 28, 30 in etwa konjugiert ist. D. h., die Bildebene 36 der Kamera 28 wird mittels der Kameraoptik 32 in die Bezugsfläche 50 scharf abgebildet und die Bildebene 38 der Kamera 30 mittels der Kameraoptik 34 in die Bezugsfläche 52.

Die Anlage 20 und die Anlage 22 sind in der Vorrichtung 10 so angeordnet, dass die in der Regel als Permanentgravuren ausgebildeten Markierungen nach der Normungsvorschrift DIN EN ISO 8980-2:2004 auf dem linken und rechten Brillenglas 16, 18 der Brille 14 in den konjugierten Ebenen 50 bzw. 52 oder nahe bei diesen Ebenen liegen.

Die Schärfentiefe der Kameraoptiken 32, 34 der ersten Kamera 28 und der zweiten Kamera 30 in der Vorrichtung 10 ist dabei derart auf die Lage des Displays 24 angepasst, dass ein damit angezeigtes Muster in den Bildebenen 36, 38 der ersten Kamera 28 bzw. der zweiten Kamera 30 noch aufgelöst wird. D. h., eine Helligkeitsverteilung, die von dem auf dem Display 24 angezeigten Muster in den Bildebenen 36, 38 der ersten Kamera 28 bzw. der zweiten Kamera 30 hervorgerufen wird, kann mathematisch umkehrbar eindeutig in die Helligkeitsverteilung des auf dem Display 24 angezeigten Musters überführt werden.

Zu bemerken ist, dass das auf dem Display 24 angezeigte Muster z. B. ein Punktemuster sein kann, wobei die erste und die zweite Kamera 28, 30 jeweils ermöglicht, das Zentrum der Punkte in dem Muster zu bestimmen. Zu bemerken ist auch, dass anstelle eines Punktemusters an dem Display 24 grundsätzlich auch Linienmuster zur Anzeige gebracht werden können, anhand derer dann vorzugsweise unter Verwendung deflektometrischer Auswertetechniken gegebenenfalls nicht nur absolut, sondern auch phasenverschiebend die optische Wirkung des linken und rechten Brillenglases 16, 18 einer in der Vorrichtung 10 angeordneten Brille 14 bestimmt wird.

Die Bilderfassungseinrichtung 26 in der Vorrichtung 10 ist also dazu ausgelegt, mittels der Bildsensoren 40, 42 in den Kameras 28, 30 zum einen das linke und das rechte Brillenglas 16, 18 der Brille 14 aufzunehmen und zum anderen das Bild der an dem Display 24 angezeigten Teststruktur 25 mit einem Abbildungsstrahlengang zu erfassen, der durch das linke und das rechte Brillenglas 16, 18 geführt ist.

Die Kameraoptiken 32, 34 sind hierfür in der Vorrichtung 10 auf die an der Anlage 20, 22 in der Aufnahme 12 anliegenden Brillengläser 16, 18 fokussiert. Die Kameraoptiken 32, 34 gewährleisten jedoch dabei einen Schärfentiefenbereich, der das scharfe Erfassen der Teststruktur 25 mit einem die Brillengläser 16, 18 durchsetzenden Abbildungsstrahlengang in den Bildebenen 36, 38 der Bildsensoren 40, 42 sicherstellt.

Die Vorrichtung 10 enthält eine Beleuchtungseinrichtung 54 für das Bereitstellen von Beleuchtungslicht mit einem Beleuchtungsstrahlengang 56, 58, der das linke und rechte Brillenglas 16, 18 der zu vermessenden Brille 14 in der optischen Achse 44, 46 der Kameraoptik 32 der ersten Kamera 28 bzw. der Kameraoptik 34 der zweiten Kamera 30 durchsetzt. Die Beleuchtungseinrichtung 54 hat hierfür Lichtquellen 57, 59 für das Erzeugen von Beleuchtungslicht. Sie weist einen ersten Strahlteiler 60 auf, der zwischen der Kameraoptik 32 der ersten Kamera 28 und dem linken Brillenglas 16 einer in der Messposition angeordneten Brille 14 positioniert ist, und hat einen zweiten Strahlteiler 62, der sich zwischen der Kameraoptik 34 der zweiten Kamera 30 und dem rechten Brillenglas 18 einer in der Messposition angeordneten Brille 14 befindet.

Zwischen dem flächigen Display 24 und der Aufnahme 12 für das Vermessen einer darin angeordneten Brille 14 gibt es in der Vorrichtung 10 eine drehbeweglich gelagerte Reflektorscheibe, die als ein einstellbarer Reflektor 76 wirkt. Die Reflektorscheibe hat Sektoren 77, die das Beleuchtungslicht der Beleuchtungseinrichtung 54 durch das linke bzw. rechte Brillenglas 16, 18 hindurch zurück zu der ersten Kamera 28 und zu der zweiten Kamera 30 in der Bilderfassungseinrichtung 26 reflektieren. Die Sektoren 79 der Reflektorscheibe sind demgegenüber für das Licht der Beleuchtungseinrichtung 54 durchlässig. Die Reflektorscheibe kann mittels eines motorischen Antriebs 78 um eine Drehachse 80 bewegt werden.

Die Vorrichtung 10 weist darüber hinaus eine weitere Beleuchtungseinrichtung 81 mit Lichtquellen 83 für das Erzeugen von UV-Licht auf. Die Beleuchtungseinrichtung 81 ist für das Bereitstellen von UV-Licht mit einem Strahlengang ausgelegt, der das linke und rechte Brillenglas 16, 18 einer in der Aufnahme 12 der Vorrichtung 10 in der Messposition angeordneten Brille 14 durchsetzt. Die Beleuchtungseinrichtung 81 dient dazu, mittels der Bildsensoren 40, 42 der Kameras 28, 30 das UV-Absorptionsverhalten der Brillengläser 16, 18 einer in der Aufnahme 12 der Vorrichtung 10 angeordneten Brille zu bestimmen.

Um das Display 24 und die Bilderfassungseinrichtung 26 sowie die Beleuchtungseinrichtung 54, die weitere Beleuchtungseinrichtung 81 und das Bewegen der Reflektorscheibe in der Vorrichtung 10 zu steuern, weist diese eine Rechnereinheit 82 auf. Die Rechnereinheit 82 enthält ein Computerprogramm, das aus der mit der Bilderfassungseinrichtung 26 erfassten Abbildung der Brille 14 sowie der Teststruktur 25 und der Relativposition von Display 24 und Bilderfassungseinrichtung 26 sowie der Relativposition von Bilderfassungseinrichtung 26 und der Anlage 20 für das linke Brillenglas 16 sowie der Relativposition von Bilderfassungseinrichtung 26 und der Anlage 22 für das rechte Brillenglas 18 eine zu einem Koordinatensystem 85 der Brille 14 referenzierte Brechkraftverteilung für wenigstens einen Abschnitt des linken Brillenglases 16 und für wenigstens einen Abschnitt des rechten Brillenglases 18 in einem zu der Vorrichtung 10 ortsfesten Koordinatensystem 84 bestimmt.

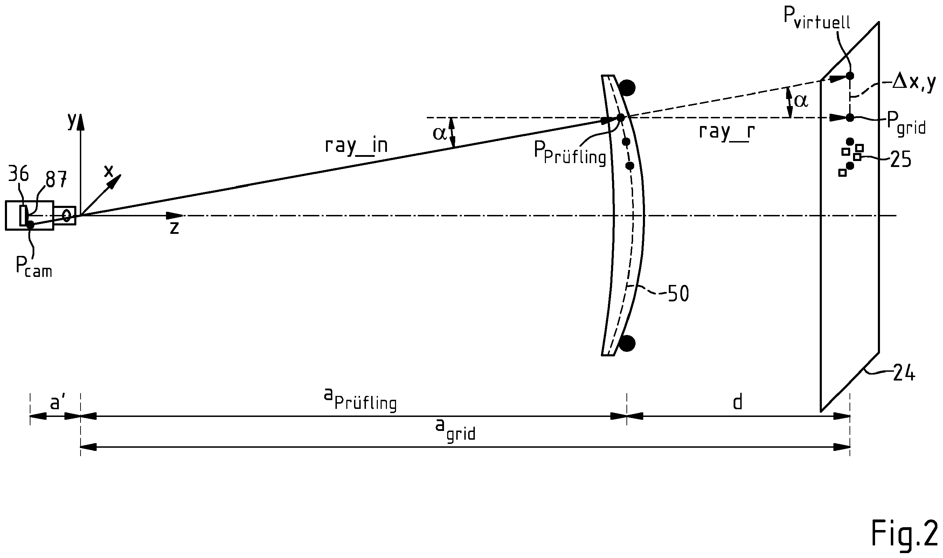

Die Fig. 2 ist eine Teilansicht der Vorrichtung 10 in Form von einem schematischen Schnitt entlang der Linie II - II aus der Fig. 1 und dient der Erläuterung, wie das Computerprogramm in der Rechnereinheit 82 die Brechkraftverteilung für das linke Brillenglas 16 und das rechte Brillenglas 18 in der Vorrichtung 10 bestimmt.

Das Computerprogramm in der Rechnereinheit 82 enthält einen Algorithmus, der die lokale Verzeichnung der Teststruktur 25 aus dem Differenzbild des mit der Kamera 28 erfassten Bilds berechnet, wenn in der Aufnahme 12 der Vorrichtung 10 aus Fig. 1 keine Brille angeordnet ist und wenn sich dort eine Brille 14 befindet. Aus der berechneten Verzeichnung werden dann Ablenkwinkel für die die Teststruktur 25 abbildenden Lichtstrahlen bestimmt. Aus der Verzeichnung des Bilds 87 der an dem Display 24 angezeigten Teststruktur 25 in der Bildebene 36 der Kamera 28 und der bekannten Relativposition des Brillenglases 16 in Bezug auf die Kamera 28 und gegenüber dem Display 24 ermittelt das Computerprogramm dann den lokalen Ablenkwinkel α der Lichtstrahlen ray_r, die von den einzelnen Punkten P_{grid} der an dem Display 24 angezeigten Teststruktur 25 durch ein Brillenglas 16, 18 in die Kamera 28 bzw. 30 gelangen. Die Bezugsflächen 50, 52 werden hier jeweils als virtuelle Brechebenen herangezogen. In entsprechender Weise wertet das Computerprogramm in der Rechnereinheit 82 die Verzeichnung des Bildes der an dem Display 24 angezeigten Teststruktur 25 in der Bildebene 38 der Kamera 30 aus. Dieses deflektometrische Auswerteverfahren nutzt also aus, dass die räumlichen Koordinaten x, y, z eines jeden auf dem Display 24 angezeigten Punktes P_{grid} bekannt sind.

Das Computerprogramm berechnet den Schwerpunkt jedes Punktes P_{cam} in der Bildebene 36, 38 einer Kamera 28, 30. Aus diesen Punkten P_{cam} ermittelt das Computerprogramm dann Schwerpunktslichtstrahlen in Form von Vektoren ray_in. Die Schwerpunktslichtstrahlen ray_in schneidet das Computerprogramm mit der Ebene des Displays 24. Auf diese Weise berechnet das Computerprogramm in der Ebne des Displays 24 eine Vielzahl von virtuellen Beobachtungspunkten Pᵥᵢᵣₜᵤₑₗₗ der Teststruktur 25.

Die Ablage Δ = P_{grid} - Pᵥᵢᵣₜᵤₑₗₗ eines an dem Display 24 angezeigten Punkts P_{grid} von dem entsprechenden virtuellen Beobachtungspunkt Pᵥᵢᵣₜᵤₑₗₗ beschreibt die durch die optische Wirkung des Brillenglases 16 bzw. 18 hervorgerufene Verschiebung des Punktes P_{grid}.

Um die optische Wirkung des Brillenglases 16 bzw. des Brillenglases 18 zu bestimmen, ermittelt das Computerprogramm aus der bekannten Relativposition der Anlagen 20, 22 in der Vorrichtung 10 in Bezug auf das Display 24 und den Bildebenen 36, 38 der Kamera 28 bzw. 30 den Ort P_{Prüfling}, an dem ein von dem Display 24 ausgehender Lichtstrahl ein entsprechendes Brillenglas 16, 18 durchsetzt. Aus den drei Punkten P_{Prüfling}, Pᵥᵢᵣₜᵤₑₗₗ und P_{grid} werden mit dem Computerprogramm in der Rechnereinheit 82 dann jeweils die lokalen Strahlablenkungen für die Lichtstrahlen bestimmt, welche die Brillengläser 16, 18 einer in der Vorrichtung 10 angeordneten Brille 14 durchsetzen. Hieraus ermittelt das Computerprogramm dann die Brechkraftverteilung, die einer der von dem Brillenglas 16 bzw. dem Brillenglas 18 hervorgerufenen lokalen Strahlablenkungen dieser Lichtstrahlen entspricht.

In der Vorrichtung 10 wird also die Brechkraftverteilung des linken Brillenglases 16 und/oder des rechten Brillenglases 18 aus den Koordinaten der Teststruktur 25 und der erfassten Abbildung der Teststruktur 25 und aus der Position des linken Brillenglases 16 und/oder des rechten Brillenglases 18 relativ zu der Teststruktur 25 bzw. der Abbildung der Teststruktur 25 bestimmt.

Bevorzugt berücksichtigt das Computerprogramm dabei auch Parameter der Brillengläser 16, 18 einer zu vermessenden Brille 14, die für die Brillengläser 16, 18 spezifisch sind, etwa deren Randparameter, das Verhältnis der Radien, die Mittendicke, die Randdicke oder auch Radienabstufungen. Solche Parameter können auch Informationen über die Mittel- und Randdicke eines Brillenglases enthalten, das einen bekannten Durchmesser hat. Ein für ein Brillenglas 16, 18 spezifischer Parameter kann auch die über das Gestell einer Brille, in das ein Brillenglas eingesetzt wird, definierte Randdichte sein. Ein für ein Brillenglas 16, 18 spezifischer Parameter können auch die Krümmungsradien einer optisch wirksamen Fläche sein.

Je genauer nämlich die Form eines Brillenglases 16, 18 vorbekannt ist, umso genauer kann mittels des Computerprogramms in der Rechnereinheit 82 für das Brillenglas 16, 18 die Gesamtbrechkraftverteilung und die genaue Flächentopografie bestimmt werden.

Zu bemerken ist, dass es die Vorrichtung 10 ermöglicht, mit dem von der ersten Kamera 28 und der zweiten Kamera 30 gebildeten Kamerapaar auch stereometrische Daten zu den in der Brille 14 angeordneten Brillengläsern 16, 18 zu erfassen, aus denen zum einen Information über die Form, z. B. das Verhältnis der Krümmungsradien von Vorder- und Rückseite oder Information über die Glasdicke ermittelt werden kann, und zum anderen Information über die Position eines Brillenglases 16, 18 in einer Brille 14 und/oder die Brechzahl des Materials des Brillenglases.

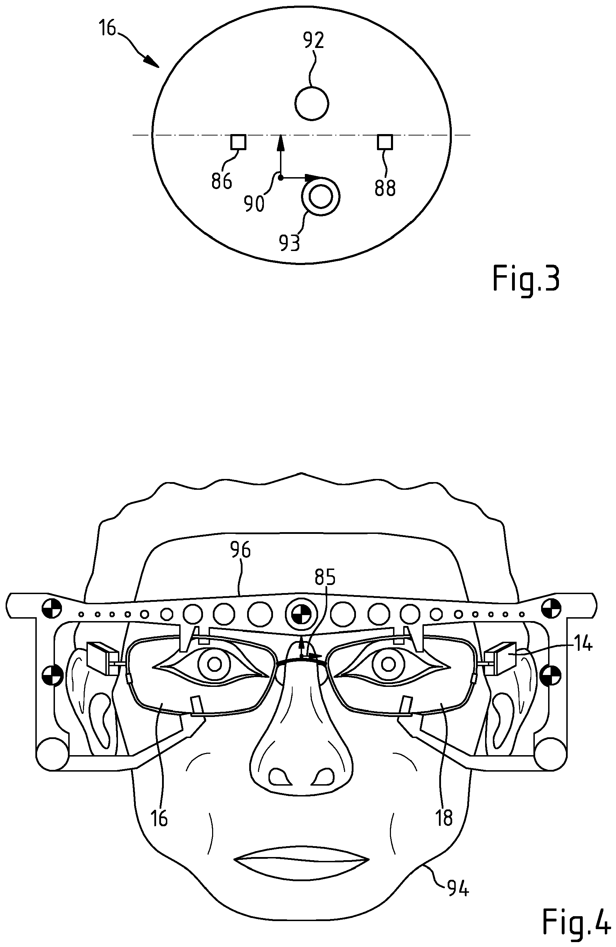

Die Fig. 3 zeigt ein Brillenglas 16 einer Gleitsichtbrille mit Markierungen 86, 88 entsprechend der Normungsvorschrift DIN EN ISO 8980-2:2004, die das lokale Brillenglas-Koordinatensystem 90 definieren. Auf dem Brillenglas 16 sind darüber hinaus auch die Lage des Nahbezugspunkts 92 und des Fernbezugspunkts 93 kenntlich gemacht.

Um sicherzustellen, dass Angaben auf einem Brillenglas nicht die Sicht des Brillenträgers beeinträchtigen, werden die auf einem ungerandeten Brillenglas herstellerseitig angebrachten Angaben von einem Augenoptiker soweit möglich entfernt, bevor das Glas in eine Brillenfassung eingesetzt wird. Das hat zur Folge, dass z. B. die Lage des Nah- und Fernbezugspunkts 92, 93 eines Brillenglases 16 nach dem Einsetzen in die Fassung einer Brille 14 nur mit vergleichsweise hohem Aufwand ermittelt werden kann.

Die das lokale Brillenglas-Koordinatensystem 90 definierenden Markierungen 86, 88 sind Permanentmarkierungen und wirken als Phasenobjekte für das Licht, die mit bloßem Auge nur schwer sichtbar sind.

Die Fig. 4 zeigt eine Beobachtungsperson 94 mit einer Brille 14 und einem daran festgelegten Messbügel 96, der dazu dient, die Anpassparameter für das linke und rechte Brillenglas 16, 18 in Form des Pupillenabstands und die erforderliche Lage des Nahbezugspunkts 92 sowie des Fernbezugspunkts 93 in einem zu der Brille 14 ortsfesten Koordinatensystem 85 zu bestimmen.

Diese Anpassparameter können z. B. bestimmt werden, indem die Beobachtungsperson 94 mit einer Kamera (nicht gezeigt) bei einer Blickrichtung in die Nähe und einer Blickrichtung in die Ferne aufgenommen und die Lage der Pupillen dann mittels Bildverarbeitung in dem zu der Brille 14 ortsfesten Koordinatensystem 85 ermittelt wird.

Die in der Fig. 1 gezeigte Vorrichtung 10 ist dazu ausgelegt, die Lage der Markierungen 86, 88 zu erfassen und dabei das durch diese Markierungen 86, 88 definierte Brillenglas-Koordinatensystem 90 zu dem Koordinatensystem der Brille 14 zu referenzieren.

Das in den optischen Achsen 44, 46 der in der Fig. 1 gezeigten Kameraoptiken 32, 34 geführte Beleuchtungslicht der Beleuchtungseinrichtung 54 in der Vorrichtung 10 durchsetzt das linke und rechte Brillenglas 16, 18 einer in der Aufnahme 12 der Vorrichtung 10 angeordneten Brille 14. Dieses Beleuchtungslicht wird an den das Licht reflektierenden Sektoren 77 der Reflektorscheibe reflektiert und gelangt dann durch das linke bzw. rechte Brillenglas 16, 18 über die Strahlteiler 60, 62 auf die Bildebenen 36, 38 der ersten bzw. zweiten Kamera 28, 30.

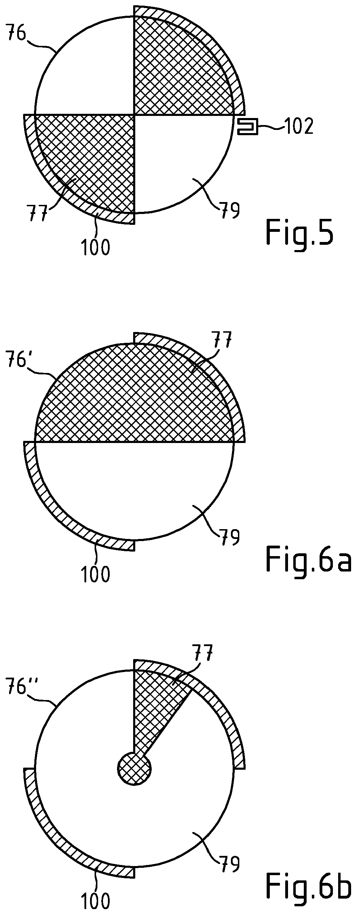

Die Fig. 5 zeigt eine Ausführungsform der in der Vorrichtung aus Fig. 1 verwendbaren drehbaren Reflektorscheibe. Die Reflektorscheibe weist in den Abschnitten der das Licht reflektierenden Sektoren 77 bogenförmig erstreckte Markierungen 100 auf. In der Vorrichtung 10 wird die Position dieser Markierungen 100 mit einer Lichtschranke 102 erfasst, die mit der Rechnereinheit 82 verbunden ist und die als ein Drehsensor wirkt. Dieser Drehsensor dient für das Synchronisieren der Bilderfassung mittels der Kameras 28, 30 in der Bilderfassungseinrichtung 26 aufgrund von Triggersignalen, welche die Drehstellung der Reflektorscheibe anzeigen.

Das Phasenobjekt der Markierungen 86, 88 auf den Brillengläsern 16, 18 hat zur Folge, dass an diesen das Licht stärker gestreut wird als in den übrigen Bereichen der Brillengläser 16, 18. Wie in der DE 103 33 426 B4 in Absatz [0024] beschrieben, können diese dann mittels der ersten bzw. der zweiten Kamera 28, 30 als dunkle Strukturen auf einem hellen Hintergrund erfasst werden.

Indem mit der ersten bzw. zweiten Kamera 28, 30 ein Abschnitt des Brillengestells der Brille 14 erfasst wird, aus dem mittels Bildauswertung das Koordinatensystem 85 der Brille 14 bestimmt werden kann, ist es in der Vorrichtung 10 möglich, dieses Koordinatensystem 85 zu dem Koordinatensystem 84 der Vorrichtung 10 zu referenzieren.

Wenn die das Licht reflektierenden Sektoren 77 der Reflektorscheibe das linke und rechte Brillenglas 16, 18 einer Brille wenigstens teilweise freigeben, kann eine an dem Display 24 zur Anzeige gebrachte Teststruktur 25 mittels der Kameras 28, 30 erkannt werden.

Durch Auswerten der Bilder der Kameras 28, 30 in Abhängigkeit der Drehstellung der Reflektorscheibe mittels der Rechnereinheit 82 kann in dem Koordinatensystem 84 der Vorrichtung 10 die Verteilung der Brechkraft für das linke und rechte Brillenglas 16, 18 einer in der Aufnahme 12 angeordneten Bille 14 bestimmt werden. Außerdem ist es damit möglich, mittels der Vorrichtung 10 das Brillenglas-Koordinatensystem 90 für das linke und rechte Brillenglas 16, 18 der Brille 14 zu dem Koordinatensystem 84 der Vorrichtung 10 und zu dem Koordinatensystem 85 der Brille 14 zu referenzieren.

In einer alternativen Ausführungsform der Vorrichtung 10 haben die Kameras 28, 30 verstellbare Kameraoptiken 32, 34, die mittels eines Autofokussystems alternierend und in Abhängigkeit der Drehstellung der Reflektorscheibe auf das Display 24 und das linke und rechte Brillenglas 16, 18 der Brille 14 fokussiert werden. Diese Maßnahme gewährleistet das scharfe Abbilden der an dem Display 24 angezeigten Teststruktur 25 und der Markierungen 86, 88 auf einem linken und rechten Brillenglas 16, 18 der Brille 14.

Die Fig. 6a und die Fig. 6b zeigt alternative Ausführungsformen eines einstellbaren Reflektors 76', 76" mit einer Reflektorscheibe für eine Vorrichtung 10, mit der sich individuelle Daten einer Brille 14 vermessen lassen.

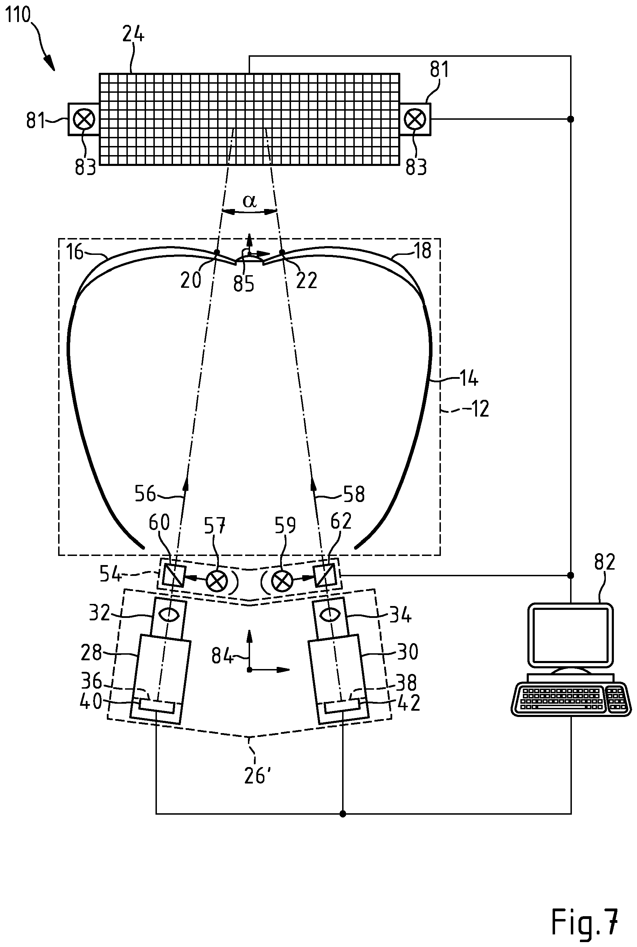

In der Fig. 7 zeigt eine zweite Vorrichtung 110 für das Vermessen von individuellen Daten einer Brille. Soweit die Baugruppen der Vorrichtung 110 den Baugruppen der vorstehend beschriebenen Vorrichtung 10 entsprechen, sind diese mit den gleichen Zahlen als Bezugszeichen kenntlich gemacht.

Anders als in der Vorrichtung 10 haben hier die Kameras 28, 30 der Bilderfassungseinrichtung 26' zueinander geneigte optische Achsen 44, 46, die einen spitzen Winkel α bilden. Mittels der Bilderfassungseinrichtung 26' können hier auf den Bildebenen der Bildsensoren 40, 42 der Kameras 28, 30 einander überlappende Abschnitte der Brillengläser 16, 18 einer in der Aufnahme 12 der Vorrichtung 110 angeordneten Brille erfasst werden. Um die anhand der Fig. 3 beschriebenen Markierungen 86, 88 auf einem Brillenglas 16, 18 zu erfassen, wird an dem Display 24 ein Streifenmuster angezeigt, das eine variierende räumliche Phase hat und das sich in unterschiedliche Richtungen erstreckt. Aus dem mittels der Kameras 28, 30 erfassten Bild dieser Streifenmuster wird dann, wie z. B. in der US 8,081,840 B2 insbesondere in Sp. 5, Z. 10 bis 50 beschrieben, in der Rechnereinheit 82 ein deflektometrisches Phasen-Amplitudenbild berechnet. Dieses berechnete Phasen-Amplitudenbild hat einen Kontrast, der so groß ist, dass der Datensatz dieser berechneten Phasen-Amplitudenbilder insbesondere die Information der Position der Markierungen enthält. Es ist auch möglich, wie in der US 8,081,840 B2 beschrieben ist, einen einfachen Muster zu benutzen und aus den erfassten Mustern ein kombiniertes Bild zu berechnen.

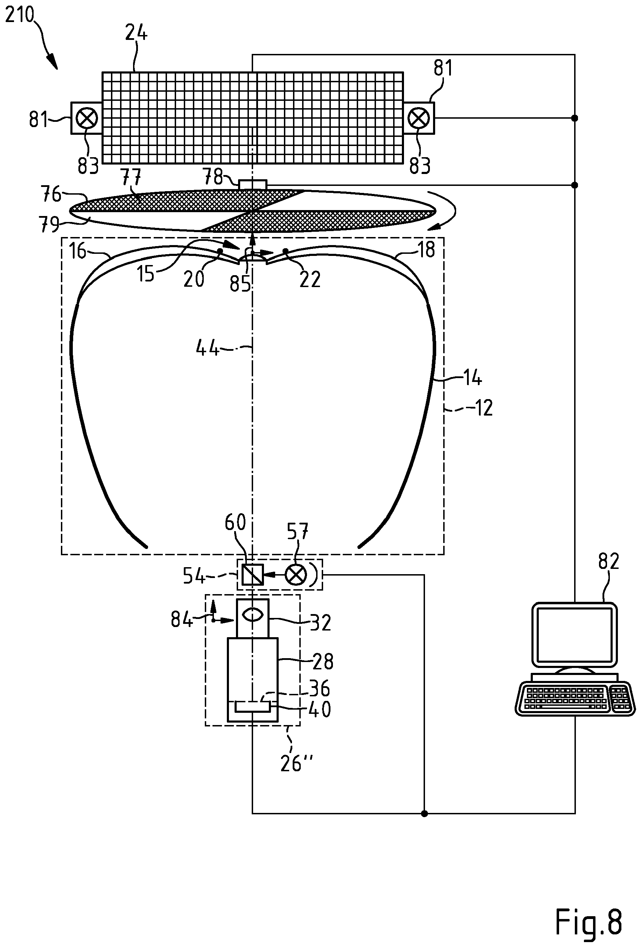

Die Fig. 8 zeigt eine dritte Vorrichtung 210 für das Vermessen von individuellen Daten einer Brille 14. Soweit die Baugruppen der Vorrichtung 210 den Baugruppen der vorstehend beschriebenen Vorrichtung 10 entsprechen, sind diese mit den gleichen Zahlen als Bezugszeichen kenntlich gemacht.

Die Vorrichtung 210 hat eine Bilderfassungseinrichtung 26", in der es lediglich eine Kamera 28 mit einer Kameraoptik 32 gibt, die eine optische Achse 44 hat, welche eine in der Aufnahme 12 der Vorrichtung 210 angeordnete Brille 14 zwischen dem ersten Brillenglas 16 und dem zweiten Brillenglas 18 durchsetzt.

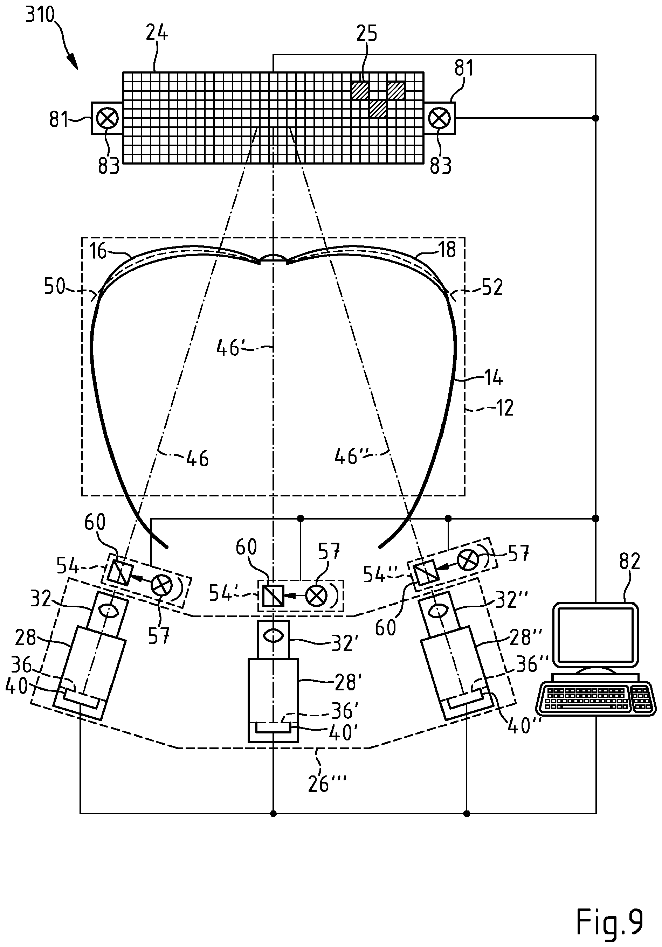

Die Fig. 9 zeigt eine vierte Vorrichtung 310 für das Vermessen von individuellen Daten einer Brille 14. Soweit die Baugruppen der Vorrichtung 310 den Baugruppen der vorstehend beschriebenen Vorrichtung 10 entsprechen, sind diese mit den gleichen Zahlen als Bezugszeichen kenntlich gemacht.

Die Vorrichtung 310 hat eine Aufnahme 12 für das Anordnen einer zu vermessenden Brille 14 mit einem linken und rechten Brillenglas 16, 18 in einer Messposition für die Brille 14.

In der Vorrichtung 310 gibt es ein flächiges Display 24 für das Anzeigen einer zweidimensionalen Teststruktur 25.

Die Vorrichtung 310 hat eine Bilderfassungseinrichtung 26"', in der es drei Kameras 28, 28' und 28" gibt. Die Kameras 28, 28', 28" enthalten jeweils eine Kameraoptik 32, 32', 32", die für das Erfassen der mittels des Displays 24 angezeigten Teststruktur 25 in einer Bildebene 36, 36', 36" mit einem Bildsensor 40, 40', 40" ausgelegt ist. Die Kameraoptiken 32, 32', 32" haben zueinander geneigte optische Achsen 46, 46' und 46". Auf der dem Display 24 zugewandten Seite der Kameraoptiken 32, 32' und 32" gibt es jeweils eine Beleuchtungseinrichtung 54, 54', 54" mit einem von den optischen Achsen 46, 46' und 46" durchsetzten Strahlteiler 60 und einer Lichtquelle 57 für das Beaufschlagen der in der Aufnahme 12 angeordneten Brille 14 mit Beleuchtungslicht. Die Kameraoptiken 32, 32', 32" in der Vorrichtung 310 haben jeweils Fokusebenen, welche die das rechte und/oder das linke Brillenglas 16, 18 der Brille 14 durchsetzenden Bezugsflächen 50, 52 schneiden oder an dem linken bzw. rechten Brillenglas 16, 18 der Brille 14 bzw. an den Bezugsflächen 50, 52 anliegen.

Die Schärfentiefe der Kameraoptiken 32, 32', 32" in der Vorrichtung 310 ist dabei derart auf die Lage des Displays 24 angepasst, dass ein damit angezeigtes Muster in den Bildebenen 36, 36', und 36" noch aufgelöst wird. D. h., eine Helligkeitsverteilung, die von dem auf dem Display 24 angezeigten Muster in den Bildebenen 36, 36', und 36" der ersten, zweiten und dritten Kamera 28, 28' und 28" hervorgerufen wird, kann mathematisch umkehrbar eindeutig in die Helligkeitsverteilung des auf dem Display 24 angezeigten Musters überführt werden.

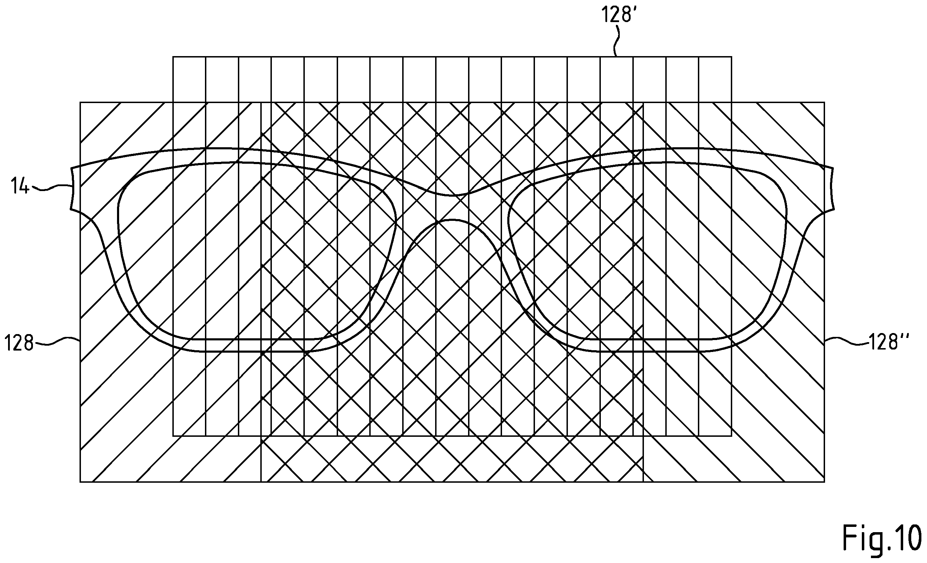

In der Fig. 10 ist das Bildfeld 128 der ersten Kamera 28, das Bildfeld 128' der zweiten Kamera 28' und das Bildfeld 128" der dritten Kamera 28" mit einer in der Vorrichtung 310 für das Vermessen angeordneten Brille 14 zu sehen. Die Bildfelder 128, 128' und 128" der Kameras 28, 28' und 28" überlappen und decken die Brillengläser 16, 18 einer in der Aufnahme 12 der Vorrichtung 310 angeordneten Brille 14 vollständig ab und gewährleisten, dass eine auf einem Brillenglas 16, 18 als eine Permanentmarkierung ausgebildete Markierung 86, 88 in den einander überlappenden Bildfeldern 128, 128' bzw. 128', 128" von jeweils wenigstens zwei Kameras 28, 28' einerseits sowie 28' und 28" andererseits liegt.

In der Vorrichtung 310 gibt es eine Rechnereinheit 82, die ein Computerprogramm für das Ermitteln der räumlichen Lage des linken und rechten Brillenglases 16, 18 mittels Bildauswertung und Triangulation aus den mit den Kameras 28, 28', 28" erfassten Bilddaten enthält. Die Rechnereinheit 82 in der Vorrichtung 310 ist eine Einrichtung für das Bestimmen der räumlichen Lage einer in der Aufnahme 12 angeordneten Brille 14 relativ zu der Bilderfassungseinrichtung 26"'. In der Vorrichtung 310 ist es damit vorzugsweise möglich, durch das Anordnen einer Brille 14 in der Aufnahme 12 der Vorrichtung 310 das Vermessen der Brille 14 automatisch auszulösen und die räumlichen Lage des linken und rechten Brillenglases 16, 18 relativ zu der Bilderfassungseinrichtung 26'" zu bestimmen.

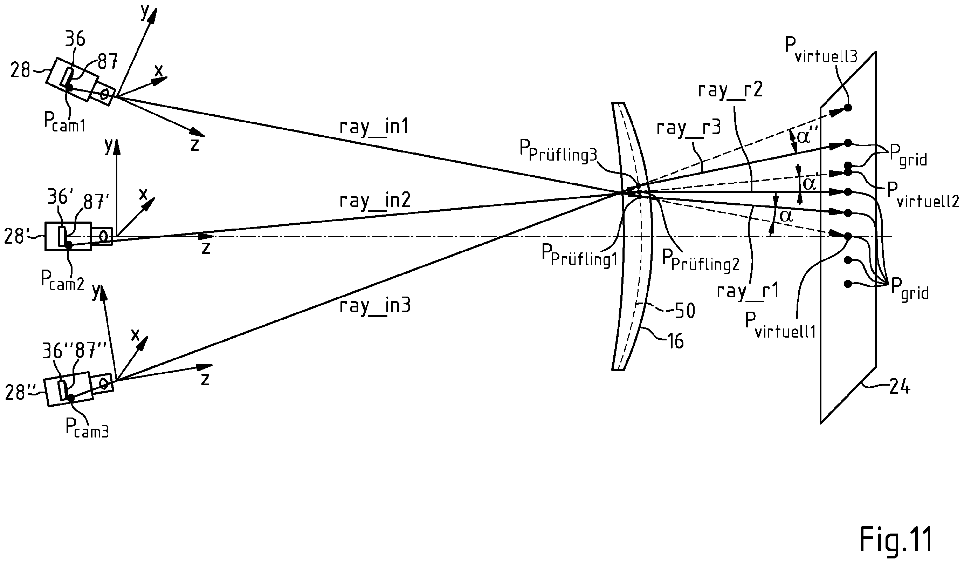

Die Fig. 11 ist eine Teilansicht der Vorrichtung aus Fig. 9. Sie dient der Erläuterung, wie das Computerprogramm in der Rechnereinheit 82 die Brechkraftverteilung für das linke Brillenglas 16 und das rechte Brillenglas 18 in der Vorrichtung 10 bestimmt.

Das Computerprogramm in der Rechnereinheit 82 in der Vorrichtung 310 enthält ebenfalls einen Algorithmus, der die lokale Verzeichnung der Teststruktur 25 aus dem Differenzbild des mit der Kamera 28 erfassten Bilds berechnet, wenn in der Aufnahme 12 der Vorrichtung 310 aus Fig. 9 keine Brille angeordnet ist und wenn sich dort eine Brille 14 befindet. Aus der berechneten Verzeichnung werden dann Ablenkwinkel für die die Teststruktur 25 abbildenden Lichtstrahlen bestimmt. In dem Computerprogramm werden die Bezugsflächen 50, 52 dabei als virtuelle Brechebenen angesetzt, die vorliegend gekrümmt sind. Aus der Verzeichnung der Bilder 87, 87', 87" der an dem Display 24 angezeigten Teststruktur 25 in den Bildebenen 36, 36', 36" der Kameras 28, 28', 28" und der bekannten Relativposition des Brillenglases 16 in Bezug auf die Kameras 28, 28', 28" und gegenüber dem Display 24 ermittelt das Computerprogramm dann lokale Ablenkwinkel α, α' und α" der Lichtstrahlen ray_r1, ray_r2 und ray_r3, die von den einzelnen Punkten P_{grid} der an dem Display 24 angezeigten Teststruktur 25 durch ein Brillenglas 16, 18 in die Kamera 28, 28' bzw. 28" gelangen. Dieses deflektometrische Auswerteverfahren nutzt also aus, dass die räumlichen Koordinaten x, y, z eines jeden auf dem Display 24 angezeigten Punktes P_{grid} bekannt sind.

Das Computerprogramm in der Rechnereinheit 82 berechnet dann, wie anhand der vorstehend erläuterten Vorrichtungen 10, 110 und 210 beschrieben, Schwerpunktlichtstrahlen in Form von Vektoren ray_in1, ray_in2 und ray_in3. Die Schwerpunktlichtstrahlen ray_in1, ray_in2 und ray_in3 schneidet das Computerprogramm mit der Ebene des Displays 24. Auf diese Weise berechnet das Computerprogramm in der Ebene des Displays 24 eine Vielzahl von virtuellen Beobachtungspunkten Pᵥᵢᵣₜᵤₑₗₗ der Teststruktur 25.

Die Ablage Δ = P_{grid} - Pᵥᵢᵣₜᵤₑₗₗ eines an dem Display 24 angezeigten Punkts P_{grid} von dem entsprechenden virtuellen Beobachtungspunkt Pᵥᵢᵣₜᵤₑₗₗ beschreibt die durch die optische Wirkung des Brillenglases 16 bzw. 18 hervorgerufene Verschiebung des Punktes P_{grid}.

Um die optische Wirkung des Brillenglases 16 bzw. des Brillenglases 18 zu bestimmen, ermittelt das Computerprogramm aus der bekannten Relativposition des linken und rechten Brillenglases 16, 18 in der Vorrichtung 310 in Bezug auf das Display 24 und der Bildebenen 36, 36', 36" der Kameras 28, 28', 28" dann den Ort P_{Prüfling}, an dem ein von dem Display 24 ausgehender Lichtstrahl ein entsprechendes Brillenglas 16, 18 durchsetzt. Aus den drei Punkten P_{Prüfling}, Pᵥᵢᵣₜᵤₑₗₗ und P_{grid} werden mit dem Computerprogramm in der Rechnereinheit 82 darauf jeweils die lokalen Strahlablenkungen wiederum für die Lichtstrahlen bestimmt, welche die Brillengläser 16, 18 einer in der Vorrichtung 310 angeordneten Brille 14 durchsetzen. Hieraus ermittelt das Computerprogramm dann die Brechkraftverteilung, die einer der von dem Brillenglas 16 bzw. dem Brillenglas 18 hervorgerufenen lokalen Strahlablenkungen dieser Lichtstrahlen entspricht.

In der Vorrichtung 310 wird also die Brechkraftverteilung des linken Brillenglases 16 und/oder des rechten Brillenglases 18 wiederum aus den Koordinaten der Teststruktur 25 und der erfassten Abbildung der Teststruktur 25 und optional aus der Position des linken Brillenglases 16 und/oder des rechten Brillenglases 18 relativ zu der Teststruktur 25 bzw. der Abbildung der Teststruktur 25 bestimmt.

Zu bemerken ist, dass die Messgenauigkeit für das Bestimmen der Brechkraftverteilung eines linken und rechten Brillenglases 16, 18 in einer Brille 14 weiter gesteigert werden kann, in dem nicht nur drei, sondern vier, fünf, sechs oder auch noch mehr Kameras mit Kameraoptiken, die zueinander geneigte optische Achsen haben, in einer Vorrichtung für das Vermessen von individuellen Daten einer Brille eingesetzt werden.

Die vorstehend beschriebenen Vorrichtungen 10, 110, 210 und 310 können in einem System für das Überprüfen individueller Daten von verglasten Brillen eingesetzt werden, um festzustellen, ob die Zentrierung eines Brillenglases in der Fassung einer Brille mit den bei der Refraktion und Anpassung ermittelten brillenträgerspezifischen Anpassparametern hinsichtlich Pupillenabstand R/L und Höhe der Pupillen übereinstimmen. Ein solches System kann z. B. eine Einrichtung für das Bewerten der Anordnung eines rechten und/oder linken Brillenglases der Brille unter Berücksichtigung einer gemessenen Brechkraftverteilung in einem zu der Brille ortsfesten Koordinatensystem enthalten. Ein solches System kann auch eine Einrichtung für das Vergleichen einer ortsaufgelösten Brechkraft des rechten und/oder linken Brillenglases der Brille mit Sollwerten aufweisen.

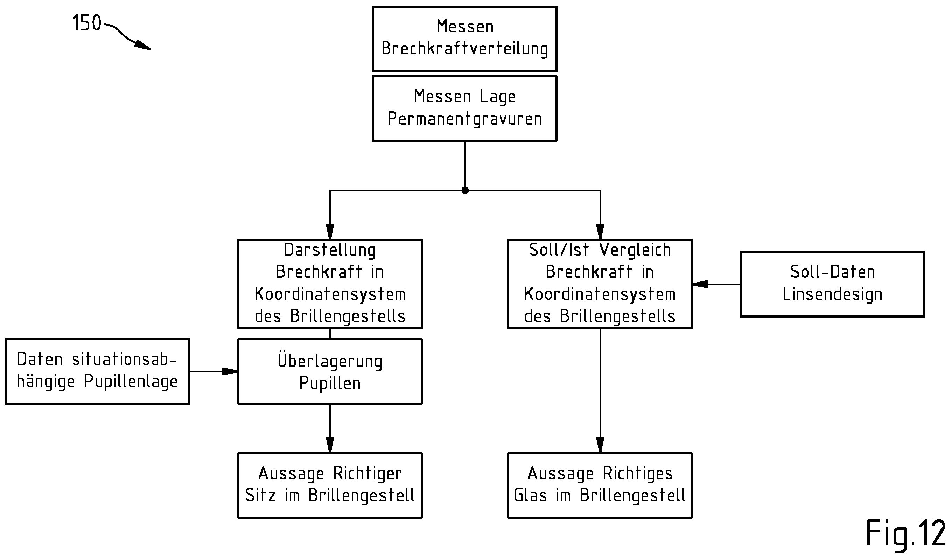

Das in der Fig. 12 gezeigte Flussdiagramm 150 dient der Erläuterung, wie in einem solchen System die Brechkraftverteilung und das Erfassen der räumlichen Lage von Permanentgravuren auf Brillengläsern 16, 18 durch das Vermessen einer in der Vorrichtung 10, 110, 210 und 310 angeordneten Brille 14 mit Daten über eine situationsabhängige Pupillenlage der Augen eines Brillenträgers und mit der Information von Soll-Daten zu einem Linsendesign in einem solchen System kombiniert werden kann.

Damit lässt sich ermitteln, ob die entsprechenden Gläser seitenrichtig eingearbeitet worden sind und/oder ob sie möglicherweise vertauscht wurden. Ein solches System ermöglicht es zu prüfen, ob die Achslage der Gläser in der Brillenfassung korrekt ist. Ein solches System ermöglicht es auch, herauszufinden, ob die Messwerte mit den bestellten Werten übereinstimmen. Ein solches System gestattet auch, eine Aussage dazu zu treffen, ob ein Brillenglas in die Fassung einer Brille richtig und spannungsfrei eingearbeitet worden ist. Mit einem solchen System kann erkannt werden, ob eine darin gemessene Wirkungsverteilung der erwarteten Wirkungsverteilung über der Fläche entspricht, ob die Pupillenlage zur Brechkraftverteilung des Brillenglases passt und ob die Brechkraftverteilung des Brillenglases auf die blickrichtungsabhängige, bzw. situationsabhängige Pupillenlage abgestimmt ist.

Zu bemerken ist, dass in einem System für das Überprüfen individueller Daten einer Brille, z. B. brillenträgerspezifischer Anpassdaten, das eine der vorstehend beschriebenen Vorrichtungen 10, 110, 210, 310 enthält, auch eine weitere qualitative Aussage über die Qualität einer gefertigten Brille aus der Überlagerung der Messdaten mit einem Bild der Anpassung getroffen werden kann. Die dafür notwendigen Bilddaten existieren dann aus der Aufnahme, welche der Optiker bei der Vermessung der Zentrierdaten, z. B. mit Hilfe eines Relax Vision Terminals, wie es in der DE 10 2010 007 922 A1 beschreiben ist, auf die hiermit Bezug genommen wird und deren Offenbarung in die Offenbarung dieser Anmeldung vollumfänglich mit einbezogen wird, gewonnen hat. Durch die Überlagerung kann schnell eine Aussage über den richtigen Sitz des Glases in der Fassung getroffen werden. Vorteilhaft ist es, wenn solche Bilder der Pupillenlage für verschiedene Sehpositionen, z. B. die Ferne, die Nähe und den Übergangsbereich oder unterschiedliche Sehsituationen, wie etwa Lesen, Autofahren, Telefonieren, Arbeiten, Musizieren, etc. ausgewertet werden.

Zu bemerken ist dabei insbesondere, dass für eine Aussage, ob das richtige Glas in die Fassung eingesetzt wurde, im einfachsten Fall Aussagen über die sphärische Wirkung, den Zylinder und das Prisma reichen. Um weitergehende Aussagen über die Wirkungsverteilung, z. B. bei individuellen Designs, insbesondere bei Gleitsichtgläsern treffen zu können, sind Solldatensätze der Brillengläser nötig. Liegen diese vor, kann über einen entsprechenden Soll - Ist Vergleich eine Aussage über die Übereinstimmung des Brillenglasdesigns getroffen werden.

Allein das Bestimmen der Flächenbrechkräfte für das Brillenglas einer Brille in einem solchen System ermöglicht es, eine fundierte Aussage zu treffen, ob der Verlauf der Flächenbrechkräfte auf die Lage der Pupillen einer Beobachtungsperson, insbesondere bei unterschiedlichen Blickrichtungen, abgestimmt ist.

Zusammenfassend ist insbesondere folgendes festzuhalten: Die Erfindung betrifft eine Vorrichtung 10, 110, 210, 310 und ein Verfahren zum Vermessen von individuellen Daten einer in einer Messposition angeordneten Brille 14 mit einem linken und/oder einem rechten Brillenglas 16, 18. Die Vorrichtung 10, 110, 210, 310 weist ein Display 24 für das Anzeigen einer Teststruktur 25 auf. Die Vorrichtung 10, 110, 210, 310 enthält eine Bilderfassungseinrichtung 26 für das Erfassen der Teststruktur 25 mit einem Abbildungsstrahlengang, der das linke Brillenglas 16 und/oder das rechte Brillenglas 18 der Brille 14 durchsetzt. Die Vorrichtung 10, 110, 210, 310 hat eine Rechnereinheit 82 mit einem Computerprogramm, das aus der mit der Bilderfassungseinrichtung 26, 26', 26", 26"' erfassten Abbildung der Teststruktur 25 und einer bekannten räumlichen Lage des Displays 24 relativ zu der Bilderfassungseinrichtung 26, 26', 26", 26'" sowie vorzugsweise einer bekannten räumlichen Lage der Brille 14 relativ zu der Bilderfassungseinrichtung 26, 26', 26", 26'" eine Brechkraftverteilung für wenigstens einen Abschnitt des linken Brillenglases 16 und/oder des rechten Brillenglases 18 bestimmt. Um individuelle Daten einer Brille 14 zu vermessen, wird die Brille 14 in einer Messposition angeordnet. Erfindungsgemäß wird dann eine Teststruktur 25 bereitgestellt. Die Abbildung der Teststruktur 25 wird dann mit einem Abbildungsstrahlengang erfasst, der ein linkes und/oder rechtes Brillenglas 16, 18 der in der Messposition angeordneten Brille 14 durchsetzt. Die Brechkraftverteilung des linken Brillenglases 16 und/oder des rechten Brillenglases 18 wird dann aus den Koordinaten der Teststruktur 25 und der erfassten Abbildung der Teststruktur 25 bestimmt.

### Bezugszeichenliste

- 10, 110, 210, 310: Vorrichtung
- 12: Aufnahme
- 14: Brille
- 15: Anlage für Brille
- 16: linkes Brillenglas
- 18: rechtes Brillenglas
- 20: Anlage - linkes Brillenglas
- 22: Anlage - rechtes Brillenglas
- 24: Display
- 25: Teststruktur
- 26, 26', 26", 26"': Bilderfassungseinrichtung
- 28, 28', 28", 30: Kamera
- 32, 32', 32", 34: Kameraoptik
- 36, 36', 36", 38: Bildebene
- 40, 40', 40", 42: Bildsensor
- 44, 46, 46', 46": optische Achse
- 50, 52: Bezugsfläche
- 54, 54', 54": Beleuchtungseinrichtung
- 56, 58: Beleuchtungsstrahlengang
- 57, 59: Lichtquelle
- 60, 62: Strahlteiler
- 76, 76', 76": einstellbarer Reflektor (Reflektorscheibe)
- 77: Sektoren
- 78: motorischer Antrieb
- 79: Sektoren
- 80: Drehachse
- 81: Beleuchtungseinrichtung
- 82: Rechnereinheit
- 83: Lichtquellen
- 84, 85: Koordinatensystem
- 86, 88, 100: Markierung
- 87, 87', 87": Bild
- 90: Brillenglas-Koordinatensystem
- 92: Nahbezugspunkt
- 93: Fernbezugspunkt
- 94: Beobachtungsperson
- 96: Messbügel
- 102: Lichtschranke
- 128, 128', 128": Bildfeld
- 150: Flussdiagramm

## Patentansprüche

1. Vorrichtung (10, 110, 210, 310) zum Vermessen von individuellen Daten einer in einer Messposition angeordneten Brille (14) mit einem linken und/oder einem rechten Brillenglas (16, 18) mit Permanentmarkierungen (86, 88),
**gekennzeichnet durch**
ein Display (24) für das Anzeigen einer Teststruktur (25),
eine Bilderfassungseinrichtung (26, 26', 26", 26"'), die für das Erfassen der Teststruktur (25) mit einem Abbildungsstrahlengang ausgelegt ist, der das linke Brillenglas (16) und/oder das rechte Brillenglas (18) der in der Messposition angeordneten Brille (14) durchsetzt, die für das Erfassen eines ein Koordinatensystem (85) der Brille (14) definierenden Abschnitts des Brillengestells der in der Messposition angeordneten Brille (14) ausgelegt ist und die für das Erfassen der jeweils das lokale, körpereigene Koordinatensystem für das linke und/oder rechte Brillenglas (16, 18) definierenden Permanentmarkierungen (86, 88) ausgelegt ist,
eine Beleuchtungseinrichtung (54, 54', 54") für das Bereitstellen von Beleuchtungslicht, das **durch** das linke Brillenglas (16) und/oder das rechte Brillenglas (18) einer in der Messposition angeordneten Brille (14) hindurchtritt, und einen einstellbaren Reflektor (76), der in einer ersten Einstellung das Beleuchtungslicht, das **durch** das linke Brillenglas (16) und/oder das rechte Brillenglas (18) einer in der Messposition angeordneten Brille (14) hindurchtritt, zumindest teilweise **durch** das linke Brillenglas (16) und/oder das rechte Brillenglas (18) zurück reflektiert und der in einer von der ersten Einstellung verschiedenen zweiten Einstellung den Abbildungsstrahlengang für das Erfassen der an dem Display (24) angezeigten Teststruktur (25) mit der Bilderfassungseinrichtung (26, 26', 26", 26"') freigibt,
eine Rechnereinheit (82) mit einem Computerprogramm, das aus dem mit der Bilderfassungseinrichtung (26, 26', 26", 26'") erfassten Abschnitt des Brillengestells der in der Messposition angeordneten Brille (14) das Koordinatensystem (85) der Brille (14) bestimmt, das aus den erfassten Permanentmarkierungen (86, 88) des linken und/oder rechten Brillenglases (16, 18) jeweils das lokale, körpereigene Koordinatensystem für das linke und rechte Brillenglas (16, 18) bestimmt und zu dem Koordinatensystem der Brille (85) referenziert, und das aus der mit der Bilderfassungseinrichtung (26, 26', 26", 26'") erfassten Abbildung der Teststruktur (25) und einer bekannten räumlichen Lage des Displays (24) relativ zu der Bilderfassungseinrichtung (26, 26', 26", 26'") eine Brechkraftverteilung für wenigstens einen Abschnitt des linken Brillenglases (16) in einem zu dem Koordinatensystem (85) der Brille und zu dem lokalen, körpereigenen Koordinatensystem für das linke Brillenglas (16) referenzierten Koordinatensystem (84) bestimmt und/oder für wenigstens einen Abschnitt des rechten Brillenglases (18) in einem zu dem Koordinatensystem (85) der Brille und zu dem lokalen, körpereigenen Koordinatensystem für das rechte Brillenglas (18) referenzierten Koordinatensystem (84) bestimmt.

2. Vorrichtung nach Anspruch 1, **dadurch gekennzeichnet, dass** der Reflektor (76) auf einer drehbaren Scheibe (76) mit wenigstens einem für das Licht durchlässigen Sektor (79) angeordnet ist.

3. Vorrichtung (10, 110, 210, 310) zum Vermessen von individuellen Daten einer in einer Messposition angeordneten Brille (14) mit einem linken und/oder einem rechten Brillenglas (16, 18) mit Permanentmarkierungen (86, 88),
**gekennzeichnet durch**
ein Display (24) für das Anzeigen einer Teststruktur (25) und/oder für das Anzeigen von Mustern, die eine variierende räumliche Phase haben und die sich in unterschiedliche Richtungen erstrecken,
eine Bilderfassungseinrichtung (26, 26', 26", 26"'),
die für das Erfassen der Teststruktur (25) und der Muster mit einem Abbildungsstrahlengang ausgelegt ist, der das linke Brillenglas (16) und/oder das rechte Brillenglas (18) der in der Messposition angeordneten Brille (14) durchsetzt,
die für das Erfassen eines ein Koordinatensystem (85) der Brille (14) definierenden Abschnitts des Brillengestells der in der Messposition angeordneten Brille (14) ausgelegt ist, und
die für das Erfassen der jeweils das lokale, körpereigene Koordinatensystem für das linke und/oder rechte Brillenglas (16, 18) definierenden Permanentmarkierungen (86, 88) ausgelegt ist,
eine Rechnereinheit (82) mit einem Computerprogramm, das aus dem mit der Bilderfassungseinrichtung (26, 26', 26", 26'") erfassten Abschnitt des Brillengestells der in der Messposition angeordneten Brille (14) das Koordinatensystem (85) der Brille (14) bestimmt, das aus den erfassten Mustern ein kombiniertes Bild berechnet, daraus die Position der Permanentmarkierungen (86, 88) des linken und/oder rechten Brillenglases (16, 18) und daraus jeweils das lokale, körpereigene Koordinatensystem für das linke und/oder rechte Brillenglas (16, 18) bestimmt und zu dem Koordinatensystem der Brille (85) referenziert, und das aus der mit der Bilderfassungseinrichtung (26, 26', 26", 26'") erfassten Abbildung der Teststruktur (25) und einer bekannten räumlichen Lage des Displays (24) relativ zu der Bilderfassungseinrichtung (26, 26', 26", 26'") eine Brechkraftverteilung für wenigstens einen Abschnitt des linken Brillenglases (16) in einem zu dem Koordinatensystem (85) der Brille und zu dem lokalen, körpereigenen Koordinatensystem für das linke Brillenglas (16) referenzierten Koordinatensystem (84) bestimmt und/oder für wenigstens einen Abschnitt des rechten Brillenglases (18) in einem zu dem Koordinatensystem (85) der Brille und zu dem lokalen, körpereigenen Koordinatensystem für das rechte Brillenglas (18) referenzierten Koordinatensystem (84) bestimmt.

4. Vorrichtung nach Anspruch 3, **dadurch gekennzeichnet, dass** das Display (24) für das Anzeigen einer Teststruktur (25) und für das Anzeigen von als Streifenmustern ausgebildeten Mustern ausgelegt ist und dass das Computerprogramm aus den erfassten Streifenmustern ein deflektometrisches Phasen-Amplitudenbild berechnet.

5. Vorrichtung nach einem der Ansprüche 1 bis 4, **gekennzeichnet durch**
a) eine Anlage (15) für die in der Messposition angeordnete Brille (14), die eine bekannte räumliche Lage der Brille (14) relativ zu der Bilderfassungseinrichtung (26, 26', 26", 26"') definiert und/oder
b) eine Einrichtung für das Bestimmen der räumlichen Lage der in der Messposition angeordneten Brille (14) relativ zu der Bilderfassungseinrichtung (26, 26', 26", 26'")
und/oder
**dadurch gekennzeichnet,** dass
die Bilderfassungseinrichtung (26, 26', 26", 26'") die Teststruktur (25) in einer zu dem linken Brillenglas (16) konjugierten Bildebene (36) und/oder in einer zu dem rechten Brillenglas (18) konjugierten Bildebene (38) erfasst,
und/oder
**dadurch gekennzeichnet,** dass die Bilderfassungseinrichtung (26, 26', 26", 26"') wenigstens eine Kamera (28, 28', 28", 30) umfasst,
und/oder
**dadurch gekennzeichnet,** dass
a) die Bilderfassungseinrichtung (26, 26') eine erste Kamera (28) mit einer ersten Bildebene (36) und eine zweite Kamera (30) mit einer zweiten Bildebene (38) aufweist, wobei das linke Brillenglas (16) einer in der Messposition angeordneten Brille (14) in der ersten Bildebene (36) abbildbar ist und/oder das rechte Brillenglas (18) einer in der Messposition angeordneten Brille (14) in der zweiten Bildebene (38) abbildbar ist; oder
b) die Bilderfassungseinrichtung (26") eine Kamera (28) mit einer Bildebene (36) aufweist, wobei das linke Brillenglas (16) einer in der Messposition angeordneten Brille (14) in der Bildebene (36) abbildbar ist und/oder das rechte Brillenglas (18) einer in der Messposition angeordneten Brille (14) in der Bildebene (36) abbildbar ist.

6. Vorrichtung nach einem der Ansprüche 1 bis 5, **dadurch gekennzeichnet, dass**
c) die Bilderfassungseinrichtung (26'") eine erste Kamera (28) mit einer ersten Bildebene (36), eine zweite Kamera (28') mit einer zweiten Bildebene (36') und eine dritte Kamera mit einer dritten Bildebene (36") aufweist, wobei das linke und rechte Brillenglas (16, 18) einer in der Messposition angeordneten Brille (14) mindestens in einer der Bildebenen (36, 36', 36") abbildbar ist.

7. Vorrichtung nach Anspruch 6, **dadurch gekennzeichnet, dass** die erste Kamera (28) der Bilderfassungseinrichtung (26) eine Kameraoptik (32) mit einer optischen Achse (44) hat, die das linke Brillenglas (16) der in der Messposition angeordneten Brille (14) durchsetzt, und die zweite Kamera (30) der Bilderfassungseinrichtung (26) eine Kameraoptik (34) mit einer optischen Achse (46) hat, die das rechte Brillenglas (18) der in der Messposition angeordneten Brille (14) durchsetzt, wobei die optische Achse (44) der Kameraoptik (32) der ersten Kamera (28) zu der optischen Achse (46) der Kameraoptik (34) der zweiten Kamera (30) parallel ist oder dass die erste Kamera (28) der Bilderfassungseinrichtung (26') eine Kameraoptik (32) mit einer optischen Achse (44) hat, die das linke Brillenglas (16) der in der Messposition angeordneten Brille (14) durchsetzt, und die zweite Kamera (30) der Bilderfassungseinrichtung (26') eine Kameraoptik (34) mit einer optischen Achse (46) hat, die das rechte Brillenglas (18) der in der Messposition angeordneten Brille (14) durchsetzt, wobei die optische Achse (44) der Kameraoptik (32) der ersten Kamera (28) mit der optischen Achse (46) der Kameraoptik (34) der zweiten Kamera (30) einen Stereowinkel (a) einschließt oder dass die erste Kamera (28) der Bilderfassungseinrichtung (26'") eine Kameraoptik (32) mit einer optischen Achse (46) hat, die das linke Brillenglas (16) der in der Messposition angeordneten Brille (14) durchsetzt und die dritte Kamera (28") der Bilderfassungseinrichtung (26'") eine Kameraoptik (32") mit einer optischen Achse (46") hat, die das rechte Brillenglas (18) der in der Messposition angeordneten Brille (14) durchsetzt, wobei die optische Achse (46) der Kameraoptik (32) der ersten Kamera (28) mit der optischen Achse (46") der Kameraoptik (32") der dritten Kamera (28") einen Stereowinkel (a') einschließt und wobei die zweite Kamera (28') mit der optischen Achse (46') der Kameraoptik (32') mit den optischen Achsen (46, 46") der Kameraoptiken (32, 32") jeweils einen Stereowinkel (ß) einschließt.

8. System für das Überprüfen individueller Daten von verglasten Brillen (14) mit einer gemäß einem der Ansprüche 1 bis 7 ausgebildeten Vorrichtung (10, 110, 210, 310) und einer Einrichtung für das Ermitteln des UV-Absorptionsverhaltens eines rechten und/oder linken Brillenglases (16, 18) der Brille (14) und/oder einer Einrichtung für das Bewerten der Anordnung eines rechten und/oder linken Brillenglases (16, 18) der Brille (14) unter Berücksichtigung einer gemessenen Brechkraftverteilung in einem zu der Brille (14) ortsfesten Koordinatensystem (85) und/oder einer Einrichtung für das Vergleichen einer ortsaufgelösten Brechkraft des rechten und/oder linken Brillenglases (16, 18) der Brille (14) mit Sollwerten.

9. Verfahren zum Vermessen individueller Daten einer in einer ortsfesten Messposition angeordneten Brille (14) mit einem linken und/oder einem rechten Brillenglas (16, 18) mit Permanentmarkierungen (86, 88),
**gekennzeichnet durch** folgende Schritte:
Erfassen einer Abbildung einer Teststruktur (25) mittels einer Bilderfassungseinrichtung (26, 26', 26", 26"') mit einem Abbildungsstrahlengang, der ein linkes und/oder ein rechtes Brillenglas (16, 18) der in der Messposition angeordneten Brille (14) durchsetzt,
Erfassen eines ein Koordinatensystem (85) der Brille (14) definierenden Abschnitts des Brillengestells der Brille (14) mittels der Bilderfassungseinrichtung (26, 26', 26", 26'"), und
Bereitstellen von Beleuchtungslicht, das **durch** das linke Brillenglas (16) und/oder das rechte Brillenglas (18) einer in der Messposition angeordneten Brille (14) hindurchtritt, und das zumindest teilweise **durch** das linke Brillenglas (16) und/oder das rechte Brillenglas (18) zurück reflektiert wird,
Erfassen der jeweils das lokale, körpereigene Koordinatensystem für das linke und/oder das rechte Brillenglas (16, 18) definierenden Permanentmarkierungen (86, 88) mittels der Bilderfassungseinrichtung (26, 26', 26", 26"'),
Bestimmen des Koordinatensystems (85) der Brille (14) aus dem mit der Bilderfassungseinrichtung (26, 26', 26", 26'") erfassten Abschnitt des Brillengestells der in der Messposition angeordneten Brille (14),
Bestimmen des jeweils lokalen, körpereigenen Koordinatensystems für das linke und/oder das rechte Brillenglas (16, 18) aus den erfassten Permanentmarkierungen (86, 88) des linken und/oder rechten Brillenglases (16, 18),
Referenzieren des jeweils lokalen, körpereigenen Koordinatensystems für das linke und/oder das rechte Brillenglas (16, 18) zu dem Koordinatensystem der Brille (85); und
Bestimmen einer Brechkraftverteilung für wenigstens einen Abschnitt des linken Brillenglases (16) in einem zu dem Koordinatensystem (85) der Brille und zu dem lokalen, körpereigenen Koordinatensystem für das linke Brillenglas (16) referenzierten Koordinatensystem (84) und/oder Bestimmen einer Brechkraftverteilung für wenigstens einen Abschnitt des rechten Brillenglases (18) in einem zu dem Koordinatensystem (85) der Brille und zu dem lokalen, körpereigenen Koordinatensystem für das rechte Brillenglas (18) referenzierten Koordinatensystem (84) aus den Koordinaten der Teststruktur (25) und der erfassten Abbildung der Teststruktur (25).

10. Verfahren zum Vermessen individueller Daten einer in einer ortsfesten Messposition angeordneten Brille (14) mit einem linken und/oder einem rechten Brillenglas (16, 18) mit Permanentmarkierungen (86, 88),
**gekennzeichnet durch** folgende Schritte:
Erfassen einer Abbildung einer Teststruktur (25) und von Mustern, die eine variierende räumliche Phase haben und die sich in unterschiedliche Richtungen erstrecken, mittels einer Bilderfassungseinrichtung (26, 26', 26", 26"') mit einem Abbildungsstrahlengang, der ein linkes und/oder ein rechtes Brillenglas (16, 18) der in der Messposition angeordneten Brille (14) durchsetzt,
Erfassen eines ein Koordinatensystem (85) der Brille (14) definierenden Abschnitts des Brillengestells der Brille (14) mittels der Bilderfassungseinrichtung (26, 26', 26", 26'"), und
Berechnen eines kombinierten Bilds aus den erfassten Mustern,
Bestimmen der Position der Permanentmarkierungen (86, 88) des linken und/oder des rechten Brillenglases (16, 18) aus dem berechneten kombinierten Bild ,
Bestimmen des jeweils lokalen körpereigenen Koordinatensystems für das linke und/oder rechte Brillenglas (16, 18) aus der Position der Permanentmarkierungen (86, 88) des linken und rechten des Brillenglases (16, 18),
Bestimmen des Koordinatensystems (85) der Brille (14) aus dem erfassten Abschnitt des Brillengestells der in der Messposition angeordneten Brille (14),
Bestimmen des jeweils lokalen, körpereigenen Koordinatensystems für das linke und/oder rechte Brillenglas (16, 18) aus den erfassten Permanentmarkierungen (86, 88) des linken und/oder rechten Brillenglases (16, 18), und
Referenzieren des jeweils lokalen, körpereigenen Koordinatensystems für das linke und/oder rechte Brillenglas (16, 18) zu dem Koordinatensystem der Brille (85);
Bestimmen einer Brechkraftverteilung für wenigstens einen Abschnitt des linken Brillenglases (16) in einem zu dem Koordinatensystem (85) der Brille und zu dem lokalen, körpereigenen Koordinatensystem für das linke Brillenglas (16) referenzierten Koordinatensystem (84) und/oder Bestimmen einer Brechkraftverteilung für wenigstens einen Abschnitt des rechten Brillenglases (18) in einem zu dem Koordinatensystem (85) der Brille und zu dem lokalen, körpereigenen Koordinatensystem für das rechte Brillenglas (18) referenzierten Koordinatensystem (84) aus den Koordinaten der Teststruktur (25) und der erfassten Abbildung der Teststruktur (25).

11. Vorrichtung (10, 110, 210, 310) zum Vermessen von individuellen Daten einer in einer Messposition angeordneten Brille (14) mit einem linken und/oder einem rechten Brillenglas (16, 18),
**gekennzeichnet durch**
ein Display (24) für das Anzeigen einer Teststruktur (25),
eine Bilderfassungseinrichtung (26, 26', 26", 26"'), die für das Erfassen der Teststruktur (25) mit einem Abbildungsstrahlengang ausgelegt ist, der das linke Brillenglas (16) und/oder das rechte Brillenglas (18) der in der Messposition angeordneten Brille (14) durchsetzt, und die für das Erfassen eines ein Koordinatensystem (85) der Brille (14) definierenden Abschnitts des Brillengestells der in der Messposition angeordneten Brille (14) ausgelegt ist, und
eine Rechnereinheit (82) mit einem Computerprogramm, das aus dem mit der Bilderfassungseinrichtung (26, 26', 26", 26"') erfassten Abschnitt des Brillengestells der in der Messposition angeordneten Brille (14) das Koordinatensystem (85) der Brille (14) bestimmt, und das aus der mit der Bilderfassungseinrichtung (26, 26', 26", 26'") erfassten Abbildung der Teststruktur (25) und einer bekannten räumlichen Lage des Displays (24) relativ zu der Bilderfassungseinrichtung (26, 26', 26", 26'") eine Brechkraftverteilung für wenigstens einen Abschnitt des linken Brillenglases (16) in einem zu dem Koordinatensystem (85) der Brille referenzierten Koordinatensystem (84) bestimmt und/oder für wenigstens einen Abschnitt des rechten Brillenglases (18) in einem zu dem Koordinatensystem (85) der Brille referenzierten Koordinatensystem (84) bestimmt.

12. Vorrichtung nach Anspruch 11, **dadurch gekennzeichnet, dass** das Computerprogramm bei der Bestimmung der Brechkraftverteilung auch eine bekannte oder ermittelte räumliche Lage der Brille (14) relativ zu der Bilderfassungseinrichtung (26, 26', 26", 26'") berücksichtigt.

13. Verfahren zum Vermessen individueller Daten einer in einer ortsfesten Messposition angeordneten Brille (14) mit einem linken und/oder einem rechten Brillenglas (16, 18),
**gekennzeichnet durch** folgende Schritte:
Erfassen einer Abbildung einer Teststruktur (25) mittels einer Bilderfassungseinrichtung (26, 26', 26", 26'") mit einem Abbildungsstrahlengang, der ein linkes und/oder rechtes Brillenglas (16, 18) der in der Messposition angeordneten Brille (14) durchsetzt,
Erfassen eines ein Koordinatensystem (85) der Brille (14) definierenden Abschnitts des Brillengestells der Brille (14) mittels der Bilderfassungseinrichtung (26, 26', 26", 26"'), und
Bestimmen des Koordinatensystems (85) der Brille (14) aus dem mit der Bilderfassungseinrichtung (26, 26', 26", 26'") erfassten Abschnitt des Brillengestells der in der Messposition angeordneten Brille (14),
Bestimmen einer Brechkraftverteilung für wenigstens einen Abschnitt des linken Brillenglases (16) in einem zu dem Koordinatensystem (85) der Brille referenzierten Koordinatensystem (84) und/oder Bestimmen einer Brechkraftverteilung für wenigstens einen Abschnitt des rechten Brillenglases (18) in einem zu dem Koordinatensystem (85) der Brille referenzierten Koordinatensystem (84) aus den Koordinaten der Teststruktur (25) und der erfassten Abbildung der Teststruktur (25).

14. Verfahren nach Anspruch 13, **dadurch gekennzeichnet, dass** bei dem Bestimmen der Brechkraftverteilung auch eine bekannte oder ermittelte räumlichen Lage der Brille (14) relativ zu der Bilderfassungseinrichtung (26, 26', 26", 26'") berücksichtigt wird.

15. Computerprogrammprodukt mit einem Computerprogramm mit Programmcode zur Durchführung aller Verfahrensschritte nach Anspruch 9 oder 10 oder 13 oder 14, wenn das Computerprogramm in eine Rechnereinheit (82) geladen und/oder in einer Rechnereinheit (82) durchgeführt wird.

## Claims

1. Apparatus (10, 110, 210, 310) for measuring individual data of spectacles (14) arranged in a measurement position, said spectacles having a left and/or a right spectacle lens (16, 18) with permanent markings (86, 88),
**characterized by**
a display (24) for displaying a test structure (25),
an image capture device (26, 26', 26", 26'") which is designed to capture the test structure (25) with an imaging beam path which passes through the left spectacle lens (16) and/or the right spectacle lens (18) of the spectacles (14) arranged in the measurement position, which is designed to capture a section of the spectacle frame of the spectacles (14) arranged in the measurement position, said section defining a coordinate system (85) of the spectacles (14), and which is designed to capture the permanent markings (86, 88) respectively defining the local, body-inherent coordinate system for the left spectacle lens (16) and/or right spectacle lens (18),
an illumination device (54, 54', 54") for providing illumination light which passes through the left spectacle lens (16) and/or the right spectacle lens (18) of spectacles (14) arranged in the measurement position, and an adjustable reflector (76) which, in a first setting, reflects the illumination light which passes through the left spectacle lens (16) and/or the right spectacle lens (18) of spectacles (14) arranged in the measurement position at least partly back through the left spectacle lens (16) and/or the right spectacle lens (18) and which, in a second setting that differs from the first setting, uncovers the imaging beam path for capturing the test structure (25), displayed on the display (24), with the image capture device (26, 26', 26", 26'"),
a computer unit (82) having a computer program which determines the coordinate system (85) of the spectacles (14) from the section, captured by the image capture device (26, 26', 26", 26'"), of the spectacle frame of the spectacles (14) arranged in the measurement position, which, from the captured permanent markings (86, 88) of the left spectacle lens (16) and/or right spectacle lens (18) respectively determines the local, body-inherent coordinate system for the left spectacle lens (16) and right spectacle lens (18) and references this to the coordinate system of the spectacles (85), and which, from the image of the test structure (25) captured by the image capture device (26, 26', 26", 26'") and a known spatial orientation of the display (24) relative to the image capture device (26, 26', 26", 26'"), determines a refractive power distribution for at least a section of the left spectacle lens (16), said refractive power distribution being determined in a coordinate system (84) that is referenced to the coordinate system (85) of the spectacles and to the local, body-inherent coordinate system for the left spectacle lens (16), and/or determines a refractive power distribution for at least a section of the right spectacle lens (18), said refractive power distribution being determined in a coordinate system (84) that is referenced to the coordinate system (85) of the spectacles and to the local, body-inherent coordinate system for the right spectacle lens (18).

2. Apparatus according to Claim 1, **characterized in that** the reflector (76) is arranged on a rotatable disk (76) with at least one sector (79) that transmits light.

3. Apparatus (10, 110, 210, 310) for measuring individual data of spectacles (14) arranged in a measurement position, said spectacles having a left and/or a right spectacle lens (16, 18) with permanent markings (86, 88),
**characterized by**
a display (24) for displaying a test structure (25) and/or displaying patterns, which patterns have a varying spatial phase and extend in different directions,
an image capture device (26, 26', 26", 26'"),
which is designed to capture the test structure (25) and the pattern with an imaging beam path which passes through the left spectacle lens (16) and/or the right spectacle lens (18) of the spectacles (14) arranged in the measurement position,
which is designed to capture a section of the spectacle frame of the spectacles (14) arranged in the measurement position, said section defining a coordinate system (85) of the spectacles (14), and which is designed to capture the permanent markings (86, 88) respectively defining the local, body-inherent coordinate system for the left spectacle lens (16) and/or right spectacle lens (18),
a computer unit (82) having a computer program which determines the coordinate system (85) of the spectacles (14) from the section, captured by the image capture device (26, 26', 26", 26"'), of the spectacle frame of the spectacles (14) arranged in the measurement position, which, from the captured patterns calculates a combined image, from this determines the position of the permanent markings (86, 88) of the left spectacle lens (16) and/or right spectacle lens (18) and, from this, respectively determines the local, body-inherent coordinate system for the left spectacle lens (16) and/or right spectacle lens (18) and references this to the coordinate system of the spectacles (85), and which, from the image of the test structure (25) captured by the image capture device (26, 26', 26", 26'") and a known spatial orientation of the display (24) relative to the image capture device (26, 26', 26", 26'"), determines a refractive power distribution for at least a section of the left spectacle lens (16), said refractive power distribution being determined in a coordinate system (84) that is referenced to the coordinate system (85) of the spectacles and to the local, body-inherent coordinate system for the left spectacle lens (16), and/or determines a refractive power distribution for at least a section of the right spectacle lens (18), said refractive power distribution being determined in a coordinate system (84) that is referenced to the coordinate system (85) of the spectacles and to the local, body-inherent coordinate system for the right spectacle lens (18).

4. Apparatus according to Claim 3, **characterized in that** the display (24) is designed to display a test structure (25) and to display patterns embodied as stripe patterns, and **in that** the computer program calculates a deflectometric phase amplitude image from the captured stripe patterns.

5. Apparatus according to any one of Claims 1 to 4, **characterized by**
a) a mount (15) for the spectacles (14) arranged in the measurement position, said mount defining a known spatial orientation of the spectacles (14) relative to the image capture device (26, 26', 26", 26"'), and/or
b) a device for determining the spatial orientation of the spectacles (14) arranged in the measurement position relative to the image capture device (26, 26', 26", 26'")
and/or
**characterized in that**
the image capture device (26, 26', 26", 26'") captures the test structure (25) in an image plane (36) conjugate to the left spectacle lens (16) and/or in an image plane (38) conjugate to the right spectacle lens (18),
and/or
**characterized in that** the image capture device (26, 26', 26", 26'") comprises at least one camera (28, 28', 28", 30),
and/or
**characterized in that**
a) the image capture device (26, 26') has a first camera (28) with a first image plane (36) and a second camera (30) with a second image plane (38), wherein the left spectacle lens (16) of spectacles (14) arranged in the measurement position is imageable in the first image plane (36) and/or the right spectacle lens (18) of spectacles (14) arranged in the measurement position is imageable in the second image plane (38); or
b) the image capture device (26") has a camera (28) with an image plane (36), wherein the left spectacle lens (16) of spectacles (14) arranged in the measurement position is imageable in the image plane (36) and/or the right spectacle lens (18) of spectacles (14) arranged in the measurement position is imageable in the image plane (36).

6. Apparatus according to any one of Claims 1 to 5, **characterized in that**
c) the image capture device (26'") has a first camera (28) with a first image plane (36), a second camera (28') with a second image plane (36') and a third camera with a third image plane (36"), wherein the left spectacle lens (16) and right spectacle lens (18) of spectacles (14) arranged in the measurement position are imageable in at least one of the image planes (36, 36', 36").

7. Apparatus according to Claim 6, **characterized in that** the first camera (28) of the image capture device (26) has a camera optical unit (32) with an optical axis (44) which passes through the left spectacle lens (16) of the spectacles (14) arranged in the measurement position and the second camera (30) of the image capture device (26) has a camera optical unit (34) with an optical axis (46) which passes through the right spectacle lens (18) of the spectacles (14) arranged in the measurement position, wherein the optical axis (44) of the camera optical unit (32) of the first camera (28) is parallel to the optical axis (46) of the camera optical unit (34) of the second camera (30), or **in that** the first camera (28) of the image capture device (26') has a camera optical unit (32) with an optical axis (44) which passes through the left spectacle lens (16) of the spectacles (14) arranged in the measurement position and the second camera (30) of the image capture device (26') has a camera optical unit (34) with an optical axis (46) which passes through the right spectacle lens (18) of the spectacles (14) arranged in the measurement position, wherein the optical axis (44) of the camera optical unit (32) of the first camera (28) includes a stereo angle (α) with the optical axis (46) of the camera optical unit (34) of the second camera (30), or **in that** the first camera (28) of the image capture device (26"') has a camera optical unit (32) with an optical axis (46) which passes through the left spectacle lens (16) of the spectacles (14) arranged in the measurement position and the third camera (28") of the image capture device (26"') has a camera optical unit (32") with an optical axis (46") which passes through the right spectacle lens (18) of the spectacles (14) arranged in the measurement position, wherein the optical axis (46) of the camera optical unit (32) of the first camera (28) includes a stereo angle (α') with the optical axis (46") of the camera optical unit (32") of the third camera (28") and wherein the second camera (28'), with the optical axis (46') of the camera optical unit (32') respectively includes a stereo angle (β) with the optical axes (46, 46") of the camera optical units (32, 32").

8. System for checking individual data of glazed spectacles (14) having an apparatus (10, 110, 210, 310) embodied according to any one of Claims 1 to 7 and a device for ascertaining the UV absorption behavior of a right and/or left spectacle lens (16, 18) of the spectacles (14) and/or a device for evaluating the arrangement of a right and/or left spectacle lens (16, 18) of the spectacles (14) taking into account a measured refractive power distribution in a coordinate system (85) that is fixed in relation to the spectacles (14) and/or a device for comparing a spatially resolved refractive power of the right and/or left spectacle lens (16, 18) of the spectacles (14) with intended values.

9. Method for measuring individual data of spectacles (14) arranged in a stationary measurement position, said spectacles having a left and/or a right spectacle lens (16, 18) with permanent markings (86, 88),
**characterized by** the following steps:
capturing an image of a test structure (25) by means of an image capture device (26, 26', 26", 26"') by way of an imaging beam path which passes through a left and/or a right spectacle lens (16, 18) of the spectacles (14) arranged in the measurement position,
capturing a section of the spectacle frame of the spectacles (14) by means of the image capture device (26, 26', 26", 26"'), said section defining a coordinate system (85) of the spectacles (14), and
providing illumination light which passes through the left spectacle lens (16) and/or the right spectacle lens (18) of spectacles (14) arranged in the measurement position and which is at least partly reflected back through the left spectacle lens (16) and/or the right spectacle lens (18),
capturing the permanent markings (86, 88) respectively defining the local, body-inherent coordinate system for the left spectacle lens (16) and/or the right spectacle lens (18) by means of the image capture device (26, 26', 26", 26"'),
determining the coordinate system (85) of the spectacles (14) from the section of the spectacle frame, captured by the image capture device (26, 26', 26", 26'"), of the spectacles (14) arranged in the measurement position,
determining the respective local, body-inherent coordinate system for the left spectacle lens (16) and/or the right spectacle lens (18) from the captured permanent markings (86, 88) of the left spectacle lens (16) and/or right spectacle lens (18),
referencing the respective local, body-inherent coordinate system for the left spectacle lens (16) and/or the right spectacle lens (18) to the coordinate system of the spectacles (85); and
determining a refractive power distribution for at least one section of the left spectacle lens (16) in a coordinate system (84) that is referenced to the coordinate system (85) of the spectacles and to the local, body-inherent coordinate system for the left spectacle lens (16) and/or determining a refractive power distribution for at least one section of the right spectacle lens (18) in a coordinate system (84) that is referenced to the coordinate system (85) of the spectacles and to the local, body-inherent coordinate system for the right spectacle lens (18), from the coordinates of the test structure (25) and the captured image of the test structure (25).

10. Method for measuring individual data of spectacles (14) arranged in a stationary measurement position, said spectacles having a left and/or a right spectacle lens (16, 18) with permanent markings (86, 88),
**characterized by** the following steps:
capturing an image of a test structure (25) and of patterns which have a varying spatial phase and which extend in different directions, by means of an image capture device (26, 26', 26", 26"') having an imaging beam path which passes through a left and/or a right spectacle lens (16, 18) of the spectacles (14) arranged in the measurement position,
capturing a section of the spectacle frame of the spectacles (14) by means of the image capture device (26, 26', 26", 26"'), said section defining a coordinate system (85) of the spectacles (14), and
calculating a combined image from the captured patterns,
determining the position of the permanent markings (86, 88) of the left spectacle lens (16) and/or the right spectacle lens (18) from the calculated combined image,
determining the respective local, body-inherent coordinate system for the left spectacle lens (16) and/or right spectacle lens (18) from the position of the permanent markings (86, 88) of the left spectacle lens (16) and the right spectacle lens (18),
determining the coordinate system (85) of the spectacles (14) from the captured section of the spectacle frame of the spectacles (14) arranged in the measurement position,
determining the respective local, body-inherent coordinate system for the left spectacle lens (16) and/or right spectacle lens (18) from the captured permanent markings (86, 88) of the left spectacle lens (16) and/or right spectacle lens (18), and
referencing the respective local, body-inherent coordinate system for the left spectacle lens (16) and/or right spectacle lens (18) to the coordinate system of the spectacles (85);
determining a refractive power distribution for at least one section of the left spectacle lens (16) in a coordinate system (84) that is referenced to the coordinate system (85) of the spectacles and to the local, body-inherent coordinate system for the left spectacle lens (16) and/or determining a refractive power distribution for at least one section of the right spectacle lens (18) in a coordinate system (84) that is referenced to the coordinate system (85) of the spectacles and to the local, body-inherent coordinate system for the right spectacle lens (18), from the coordinates of the test structure (25) and the captured image of the test structure (25).

11. Apparatus (10, 110, 210, 310) for measuring individual data of spectacles (14) arranged in a measurement position, said spectacles having a left and/or a right spectacle lens (16, 18),
**characterized by**
a display (24) for displaying a test structure (25),
an image capture device (26, 26', 26", 26"') which is designed to capture the test structure (25) with an imaging beam path which passes through the left spectacle lens (16) and/or the right spectacle lens (18) of the spectacles (14) arranged in the measurement position, and which is designed to capture a section of the spectacle frame of the spectacles (14) arranged in the measurement position, said section defining a coordinate system (85) of the spectacles (14), and
a computer unit (82) having a computer program which determines the coordinate system (85) of the spectacles (14) from the section, captured by the image capture device (26, 26', 26", 26"'), of the spectacle frame of the spectacles (14) arranged in the measurement position, and which, from the image of the test structure (25) captured by the image capture device (26, 26', 26", 26"') and a known spatial orientation of the display (24) relative to the image capture device (26, 26', 26", 26"'), determines a refractive power distribution for at least a section of the left spectacle lens (16), said refractive power distribution being determined in a coordinate system (84) that is referenced to the coordinate system (85) of the spectacles, and/or determines a retractive power distribution for at least a section of the right spectacle lens (18), said refractive power distribution being determined in a coordinate system (84) that is referenced to the coordinate system (85) of the spectacles.

12. Apparatus according to Claim 11, **characterized in that** the computer program also takes account of a known or ascertained spatial orientation of the spectacles (14) relative to the image capture device (26, 26', 26", 26"') when determining the refractive power distribution.

13. Method for measuring individual data of spectacles (14) arranged in a stationary measurement position, said spectacles having a left and/or a right spectacle lens (16, 18),
**characterized by** the following steps:
capturing an image of a test structure (25) by means of an image capture device (26, 26', 26", 26"') by way of an imaging beam path which passes through a left and/or right spectacle lens (16, 18) of the spectacles (14) arranged in the measurement position,
capturing a section of the spectacle frame of the spectacles (14) by means of the image capture device (26, 26', 26", 26"'), said section defining a coordinate system (85) of the spectacles (14), and
determining the coordinate system (85) of the spectacles (14) from the section of the spectacle frame, captured by the image capture device (26, 26', 26", 26'"), of the spectacles (14) arranged in the measurement position,
determining a refractive power distribution for at least one section of the left spectacle lens (16) in a coordinate system (84) that is referenced to the coordinate system (85) of the spectacles and/or determining a refractive power distribution for at least one section of the right spectacle lens (18) in a coordinate system (84) that is referenced to the coordinate system (85) of the spectacles, from the coordinates of the test structure (25) and the captured image of the test structure (25).

14. Method according to Claim 13, **characterized in that** a known or ascertained spatial orientation of the spectacles (14) relative to the image capture device (26, 26', 26", 26"') is also taken into account when determining the refractive power distribution.

15. Computer program product having a computer program with program code for carrying out all method steps according to Claim 9 or 10 or 13 or 14 when the computer program is loaded into a computer unit (82) and/or executed in a computer unit (82).

## Revendications

1. Ensemble (10, 110, 210, 310) de mesure de données individuelles de lunettes (14) disposées en position de mesure et présentant un verre gauche et/ou un verre droit (16, 18) de lunettes dotés de marquages permanents (86, 88),
**caractérisé par**
un affichage (24) qui affiche une structure de test (25),
un dispositif (26, 26', 26", 26"') de saisie d'image conçu pour saisir la structure de test (25) à l'aide d'un parcours de rayons d'imagerie qui traverse le verre gauche (16) et/ou le verre droit (18) des lunettes (14) disposées en position de mesure, le dispositif étant conçu pour saisir une partie de la monture des lunettes (14) disposées en position de mesure qui définit un système de coordonnées (85) des lunettes (14) et étant conçu pour saisir le système de coordonnées locales propres au corps de marquages permanents (86, 88) qui définissent le verre gauche et/ou le verre droit (16, 18) des lunettes,
un dispositif d'éclairage (54, 54', 54'') qui délivre de la lumière d'éclairage qui traverse le verre gauche (16) et/ou le verre droit (18) des lunettes (14) disposées en position de mesure et un réflecteur ajustable (76) qui, dans un premier réglage, réfléchit au moins en partie à travers le verre gauche (16) et/ou le verre droit (18) la lumière d'éclairage qui traverse le verre gauche (16) et/ou le verre droit (18) de lunettes (14) disposées en position de mesure et qui dans un deuxième réglage, différent du premier réglage, libère le parcours des rayons d'imagerie pour la saisie par le dispositif (26, 26', 26", 26"') de saisie d'image de la structure de test (25) représentée sur l'affichage (24),
une unité de calcul (82) dotée d'un programme informatique qui détermine le système de coordonnées (85) des lunettes (14) à partir de la première partie, saisie par le dispositif (26, 26', 26", 26"') de saisie d'image, de la monture des lunettes (14) disposées en position de mesure, qui détermine à partir des marquages permanents (86, 88) apportés sur le verre gauche et/ou sur le verre droit (16, 18) des lunettes le système de coordonnées local propre au corps du verre gauche et du verre droit (16, 18) et les référence par rapport au système de coordonnées (85) des lunettes, et qui détermine à partir de l'image de la structure de test (25) saisie par le dispositif (26, 26', 26", 26"') de saisie d'image et d'une position spatiale connue de l'affichage (24) par rapport au dispositif (26, 26', 26", 26"') de saisie d'image une répartition de la force de réfraction d'au moins une partie du verre gauche (16) dans un système de coordonnées (84) référencé par rapport au système de coordonnées (85) des lunettes et par rapport au système de coordonnées locales propres au corps du verre gauche (16) et/ou d'au moins une partie du verre droit (18) dans un système de coordonnées (84) référencé par rapport au système de coordonnées (85) des lunettes et par rapport au système de coordonnées locales propres au corps du verre droit (18).

2. Ensemble selon la revendication 1, **caractérisé en ce que** le réflecteur (76) est disposé sur un disque rotatif (76) qui présente au moins un secteur (79) transparent à la lumière.

3. Ensemble (10, 110; 210, 310) de mesure de données individuelles de lunettes (14) disposées en position de mesure et présentant un verre gauche et/ou un verre droit (16, 18) de lunettes dotés de marquages permanents (86, 88),
**caractérisé par**
un affichage (24) qui affiche une structure de test (25) et/ou des motifs qui ont une phase spatiale variable et qui s'étendent dans différentes directions,
un dispositif (26, 26', 26", 26"') de saisie d'image conçu pour saisir la structure de test (25) et les motifs à l'aide d'un parcours de rayons d'imagerie qui traverse le verre gauche (16) et/ou le verre droit (18) des lunettes (14) disposées en position de mesure,
le dispositif étant conçu pour saisir une partie de la monture des lunettes (14) disposées en position de mesure qui définit un système de coordonnées (85) des lunettes (14) et étant conçu pour saisir le système de coordonnées locales propres au corps de marquages permanents (86, 88) qui définissent le verre gauche et/ou le verre droit (16, 18) des lunettes,
une unité de calcul (82) dotée d'un programme informatique qui détermine le système de coordonnées (85) des lunettes (14) à partir de la première partie, saisie par le dispositif (26, 26', 26", 26"') de saisie d'image, de la monture des lunettes (14) disposées en position de mesure, qui détermine à partir des motifs qui ont été saisis une image combinée à partir de laquelle est déterminée la position des marquages permanents (86, 88) apportés sur le verre gauche et/ou le verre droit (16, 18) des lunettes et à partir de là le système de coordonnées local propre au corps du verre gauche et du verre droit (16, 18) et les référence par rapport au système de coordonnées (85) des lunettes, et qui détermine à partir de l'image de la structure de test (25) saisie par le dispositif (26, 26', 26'', 26"') de saisie d'image et d'une position spatiale connue de l'affichage (24) par rapport au dispositif (26, 26', 26", 26"') de saisie d'image une répartition de la force de réfraction d'au moins une partie du verre gauche (16) dans un système de coordonnées (84) référencé par rapport au système de coordonnées (85) des lunettes et par rapport au système de coordonnées locales propres au corps du verre gauche (16) et/ou d'au moins une partie du verre droit (18) dans un système de coordonnées (84) référencé par rapport au système de coordonnées (85) des lunettes et par rapport au système de coordonnées locales propres au corps du verre droit (18).

4. Ensemble selon la revendication 3, **caractérisé en ce que** l'affichage (24) est conçu pour l'affichage d'une structure de test (25) et pour l'affichage de motifs configurés comme motifs en bandes et **en ce que** le programme informatique calcule une image déflectométrique d'amplitude et de phase à partir des motifs en bandes qui ont été saisis.

5. Ensemble selon l'une des revendications 1 à 4, **caractérisé par**
a) une installation (15) pour les lunettes (14) disposées en position de mesure, qui définit une position spatiale connue des lunettes (14) par rapport au dispositif (26, 26', 26", 26"') de saisie d'image et/ou
b) un dispositif de détermination de la position spatiale des lunettes (14) disposées en position de mesure par rapport au dispositif (26, 26', 26" , 26"') de saisie d'image,
et/ou
**caractérisé en ce que**
le dispositif (26, 26', 26", 26"') de saisie d'image saisit la structure de test (25) dans un plan d'image (36) conjugué au verre gauche (16) et/ou dans un plan d'image (38) conjugué au verre droit (18),
**en ce que** le dispositif (26, 26', 26", 26"') de saisie d'image comporte au moins une caméra (28, 28', 28", 30),
**en ce que**
a) le dispositif (26, 26') de saisie d'image présente une première caméra (28) présentant un premier plan d'image (36) et une deuxième caméra (30) présentant un deuxième plan d'image (38), une image du verre gauche (16) des lunettes (14) disposées en position de mesure pouvant être formée dans le premier plan d'image (36) et/ou une image du verre droit (18) des lunettes (14) disposées en position de mesure pouvant être formée dans le deuxième plan d'image (38), ou
b) le dispositif (26") de saisie d'image présente une première caméra (28) présentant un premier plan d'image (36), une image du verre gauche (16) des lunettes (14) disposées en position de mesure pouvant être formée dans le plan d'image (36) et/ou une image du verre droit (18) des lunettes (14) disposées en position de mesure pouvant être formée dans le plan d'image (36).

6. Ensemble selon l'une des revendications 1 à 5, **caractérisé en ce que**
c) le dispositif (26"') de saisie d'image présente une première caméra (28) dotée d'un premier plan d'image (36), une deuxième caméra (28') dotée d'un deuxième plan d'image (36') et une troisième caméra dotée d'un troisième plan d'image (36"), l'image du verre gauche et du verre droit (16, 18) des lunettes (14) disposées en position de mesure pouvant être formée dans au moins l'un des plans d'image (36, 36', 36").

7. Ensemble selon la revendication 6, **caractérisé en ce que**
la première caméra (28) du dispositif (26) de saisie d'image possède une optique (32) de caméra dont l'axe optique (44) traverse le verre gauche (16) des lunettes (14) disposées en position de mesure et la deuxième caméra (30) du dispositif (26) de saisie d'image possède une optique (34) de caméra dont l'axe optique (46) traverse le verre droit (18) des lunettes (14) disposées en position de mesure, l'axe optique (44) de l'optique (32) de la première caméra (28) étant parallèle à l'axe optique (46) de l'optique (34) de caméra de la deuxième caméra (30),
**en ce que** la première caméra (28) du dispositif (26') de saisie d'image possède une optique (32) de caméra dont l'axe optique (44) traverse le verre gauche (16) des lunettes (14) disposées en position de mesure et la deuxième caméra (30) du dispositif (26') de saisie d'image possède une l'optique (34) de caméra dont l'axe optique (46) traverse le verre droit (18) des lunettes (14) disposées en position de mesure, l'axe optique (44) de l'optique (32) de la première caméra (28) formant un angle stéréo (α) avec l'axe optique (46) de l'optique (34) de la deuxième caméra (30), ou
**en ce que** la première caméra (28) du dispositif (26"') de saisie d'image possède une optique (32) de caméra dont l'axe optique (46) traverse le verre gauche (16) des lunettes (14) disposées en position de mesure et la troisième caméra (28") du dispositif (26"') de saisie d'image possède une optique (32") de caméra dont l'axe optique (46") traverse le verre droit (18) des lunettes (14) disposées en position de mesure, l'axe optique (46) de l'optique (32) de caméra de la première caméra (28) formant un angle stéréo (α') avec l'axe optique (46") de l'optique (32") de la troisième caméra (28"), la deuxième caméra (28') formant avec l'axe optique (46') de l'optique (32') de caméra un angle stéréo (β) avec chacun des axes optiques (46, 46'') des optiques (32, 32'') de caméra.

8. Système de vérification de données individuelles de lunettes (14) munies de verres à l'aide d'un ensemble (10, 110; 210, 310) configuré selon l'une des revendications 1 à 7 et d'un dispositif de détermination du comportement d'absorption des UV du verre gauche et du verre droit (16, 18) des lunettes (14) et/ou d'un dispositif d'évaluation de l'agencement du verre gauche et du verre droit (16, 18) des lunettes (14) en tenant compte de la répartition mesurée de la force de réfraction dans un système de coordonnées (85) fixe par rapport aux lunettes (14) et/ou d'un dispositif comparant à des valeurs de consigne la force de réfraction locale du verre gauche et du verre droit (16, 18) des lunettes (14).

9. Procédé de mesure de données individuelles de lunettes (14) disposées en position de mesure présentant un verre gauche (16) et un verre droit (18) doté de marquages permanents (86, 88),
**caractérisé par** les étapes suivantes
saisie d'une image d'une structure de test (25) au moyen d'un dispositif (26, 26', 26", 26"') de saisie d'image avec un parcours de rayons d'imagerie qui traverse le verre gauche et/ou le verre droit (16, 18) des lunettes (14) disposées en position de mesure,
saisie au moyen du dispositif (26, 26', 26", 26"') de saisie d'image d'une partie de la monture des lunettes (14) qui définit un système de coordonnées (85) des lunettes (14),
apport d'une lumière d'éclairage qui traverse le verre gauche (16) et/ou le verre droit (18) des lunettes (14) disposées en position de mesure et qui est réfléchie au moins en partie par le verre gauche (16) et/ou par le verre droit (18),
saisie au moyen du dispositif (26, 26', 26", 26"') de saisie d'image des marquages permanents (86, 88) qui définissent le système de coordonnées locales propres au corps du verre gauche et/ou du verre droit (16, 18),
détermination du système de coordonnées (85) des lunettes (14) à partir de la partie, saisie à l'aide du dispositif (26, 26', 26", 26"') de saisie d'image, de la monture des lunettes (14) disposées en position de mesure,
détermination du système de coordonnées locales propres au corps du verre gauche et/ou du verre droit (16, 18) à partir des marquages permanents (86, 88) du verre gauche et/ou du verre droit (16, 18),
référencement du système de coordonnées locales propres au corps du verre gauche et/ou du verre droit (16, 18) par rapport au système de coordonnées (85) des lunettes et
détermination de la répartition de la force de réfraction d'au moins une partie du verre gauche (16) dans un système de coordonnées (84) référencé par rapport au système de coordonnées (85) des lunettes et par rapport au système de coordonnées local propre au corps du verre gauche (16) et/ou détermination de la répartition de la force de réfraction d'au moins une partie du verre droit (18) dans un système de coordonnées (84) référencé par rapport au système de coordonnées (85) des lunettes et par rapport au système de coordonnées local propre au corps du verre droit (18), à partir des coordonnées de la structure de test (25) et de l'image de la structure de test (25) qui a été saisie.

10. Procédé de mesure de données individuelles de lunettes (14) disposées en position de mesure présentant un verre gauche (16) et un verre droit (18) doté de marquages permanents (86, 88),
**caractérisé par** les étapes suivantes
saisie d'une image d'une structure de test (25) et de motifs qui ont une phase spatiale variable et qui s'étendent dans différentes directions, au moyen d'un dispositif (26, 26', 26", 26"') de saisie d'image avec un parcours de rayons d'imagerie qui traverse le verre gauche (16) et le verre droit (18) des lunettes (14) disposées en position de mesure,
saisie au moyen du dispositif (26, 26', 26", 26"') de saisie d'image d'une partie de la monture des lunettes (14) qui définit un système de coordonnées (85) des lunettes (14),
calcul d'une image combinée à partir des motifs qui ont été saisis,
détermination de la position des marquages permanents (86, 88) du verre gauche et/ou du verre droit (16, 18) à partir de l'image combinée qui a été calculée,
détermination du système de coordonnées locales propres au corps du verre gauche et/ou du verre droit (16, 18) à partir de la position des marquages permanents (86, 88) du verre gauche et du verre droit (16, 18),
détermination du système de coordonnées (85) des lunettes (14) à partir de la partie qui a été saisie de la monture des lunettes (14) disposées en position de mesure,
détermination du système de coordonnées locales propres au corps du verre gauche et/ou du verre droit (16, 18) à partir des marquages permanents (86, 88) du verre gauche et/ou du verre droit (16, 18),
référencement du système de coordonnées locales propres au corps du verre gauche et/ou du verre droit (16, 18) par rapport au système de coordonnées (85) des lunettes et
détermination de la répartition de la force de réfraction d'au moins une partie du verre gauche (16) dans un système de coordonnées (84) référencé par rapport au système de coordonnées (85) des lunettes et par rapport au système de coordonnées local propre au corps du verre gauche (16) et/ou détermination de la répartition de la force de réfraction d'au moins une partie du verre droit (18) dans un système de coordonnées (84) référencé par rapport au système de coordonnées (85) des lunettes et par rapport au système de coordonnées local propre au corps du verre droit (18), à partir des coordonnées de la structure de test (25) et de l'image de la structure de test (25) qui a été saisie.

11. Ensemble (10, 110; 210, 310) de mesure de données individuelles de lunettes (14) disposées en position de mesure et présentant un verre gauche et/ou un verre droit (16, 18) de lunettes,
**caractérisé par**
un affichage (24) qui affiche une structure de test (25)
un dispositif (26, 26', 26", 26"') de saisie d'image conçu pour saisir la structure de test (25) à l'aide d'un parcours de rayons d'imagerie qui traverse le verre gauche (16) et/ou le verre droit (18) des lunettes (14) disposées en position de mesure et conçu pour saisir une partie de la monture des lunettes (14) disposées en position de mesure qui définit un système de coordonnées (85) des lunettes (14),
une unité de calcul (82) dotée d'un programme informatique qui détermine le système de coordonnées (85) des lunettes (14) à partir de la partie, saisie par le dispositif (26, 26', 26", 26"') de saisie d'image, de la monture des lunettes (14) disposées en position de mesure, et qui détermine à partir de l'image de la structure de test (25) saisie par le dispositif (26, 26', 26", 26"') de saisie d'image et d'une position spatiale connue de l'affichage (24) par rapport au dispositif (26, 26', 26", 26"') de saisie d'image une répartition de la force de réfraction d'au moins une partie du verre gauche (16) dans un système de coordonnées (84) référencé par rapport au système de coordonnées (85) des lunettes et par rapport au système de coordonnées locales propres au corps du verre gauche (16) et/ou d'au moins une partie du verre droit (18) dans un système de coordonnées (84) référencé par rapport au système de coordonnées (85) des lunettes.

12. Ensemble selon la revendication 11, **caractérisé en ce que** lors de la détermination de la répartition de la force de réfraction, le programme informatique tient également compte d'une position spatiale, connue ou déterminée, des lunettes (14) par rapport au dispositif (26, 26', 26", 26"') de saisie d'image.

13. Procédé de mesure de données individuelles de lunettes (14) disposées en position fixe de mesure et présentant un verre gauche (16) et un verre droit (18) doté de marquages permanents (86, 88),
**caractérisé par** les étapes suivantes
saisie d'une image d'une structure de test (25) au moyen d'un dispositif (26, 26', 26", 26"') de saisie d'image avec un parcours de rayons d'imagerie qui traverse le verre gauche et/ou le verre droit (16, 18) des lunettes (14) disposées en position de mesure,
saisie au moyen du dispositif (26, 26', 26", 26"') de saisie d'image d'une partie de la monture des lunettes (14) qui définit un système de coordonnées (85) des lunettes (14),
détermination du système de coordonnées (85) des lunettes (14) à partir de la partie, saisie à l'aide du dispositif (26, 26', 26", 26"') de saisie d'image, de la monture des lunettes (14) disposées en position de mesure et
détermination de la répartition de la force de réfraction d'au moins une partie du verre gauche (16) dans un système de coordonnées (84) référencé par rapport au système de coordonnées (85) des lunettes et/ou détermination de la répartition de la force de réfraction d'au moins une partie du verre droit (18) dans un système de coordonnées (84) référencé par rapport au système de coordonnées (85) des lunettes, à partir des coordonnées de la structure de test (25) et de l'image de la structure de test (25) qui a été saisie.

14. Procédé selon la revendication 13, **caractérisé en ce que** lors de la détermination de la répartition de la force de réfraction, la position spatiale connue ou qui a été déterminée des lunettes (14) par rapport au dispositif (26, 26', 26", 26"') de saisie d'image est également prise en compte.

15. Produit de programme informatique doté d'un programme informatique présentant des codes de programme permettant d'exécuter toutes les étapes d'un procédé selon les revendications 9 ou 10 ou 13 ou 14 lorsque le programme informatique est chargé dans une unité de calcul (82) et/ou exécuté dans une unité de calcul (82).
